(19) Europäisches Patentamt
European Patent Office
Office européen des brevets

(11) EP 2 826 813 B1

(12) **EUROPEAN PATENT SPECIFICATION**

(45) Date of publication and mention of the grant of the patent:
**25.05.2016 Bulletin 2016/21**

(21) Application number: **13760551.5**

(22) Date of filing: **14.03.2013**

(51) Int Cl.:
***C08J 9/18*** *(2006.01)* ***B29C 44/44*** *(2006.01)*
*C08L 23/12* *(2006.01)* *C08K 5/17* *(2006.01)*

(86) International application number:
**PCT/JP2013/057267**

(87) International publication number:
**WO 2013/137411 (19.09.2013 Gazette 2013/38)**

(54) **POLYPROPYLENE RESIN FOAM PARTICLES, IN-MOLD FOAM MOLDED BODY COMPRISING POLYPROPYLENE RESIN FOAM PARTICLES, AND METHOD FOR PRODUCING SAME**

POLYPROPYLENHARZSCHAUMTEILCHEN, HINTERSPRITZTER SCHAUMFORMKÖRPER MIT POLYPROPYLENHARZSCHAUMTEILCHEN UND VERFAHREN ZUR HERSTELLUNG DAVON

PARTICULES DE MOUSSE EN RÉSINE POLYPROPYLÈNE, CORPS MOULÉ EN MOUSSE DANS LE MOULE COMPRENANT DES PARTICULES DE MOUSSE EN RÉSINE POLYPROPYLÈNE, ET PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2012 JP 2012057141**

(43) Date of publication of application:
**21.01.2015 Bulletin 2015/04**

(73) Proprietor: **Kaneka Corporation**
**Osaka-shi, Osaka 530-8288 (JP)**

(72) Inventors:
- **SATO, Keishi**
**Settsu-shi**
**Osaka 566-0072 (JP)**
- **NAKAYAMA, Kiyotaka**
**Settsu-shi**
**Osaka 566-0072 (JP)**
- **YOSHIDA, Toru**
**Settsu-shi**
**Osaka 566-0072 (JP)**
- **EBINA, Takayuki**
**Settsu-shi**
**Osaka 566-0072 (JP)**

(74) Representative: **TBK**
**Bavariaring 4-6**
**80336 München (DE)**

(56) References cited:
**WO-A1-2013/011951** **JP-A- 2000 007 854**
**JP-A- 2000 007 854** **JP-A- 2000 290 421**
**JP-A- 2002 146 113** **JP-A- 2009 256 470**
**US-A1- 2004 054 042**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 826 813 B1

## Description

Technical Field

The present invention relates to (i) expanded polypropylene resin particles, (ii) an in-mold expanded molded product comprising the expanded polypropylene resin particles, (iii) a method for producing the expanded polypropylene resin particles, and (iv) a method for producing the in-mold expanded molded product. More specifically, the present invention relates to (i) expanded polypropylene resin particles that allow an in-mold expanded molded product made thereof to have less locational unevenness in antistatic property among a plurality of locations in the in-mold expanded molded product and (ii) an in-mold expanded molded product comprising the expanded polypropylene resin particles.

Background Art

An expanded polypropylene resin molded product is excellent in physical properties such as a shock absorbing property and a heat insulating property, and is used in various fields. For example, an expanded polypropylene resin molded product is used as a packing material, a buffer material, a heat insulating material, or a construction material. In particular, it is relatively easy to produce a product having a complicated shape by in-mold foaming molding in which a mold is filled with expanded polypropylene resin particles and is heated with use of steam or the like so as to fuse the expanded particles with one another and to consequently produce an expanded molded product having a predetermined shape. The in-mold foaming molding is thus employed in various applications.

One of such applications is for shock-absorbing packing materials for electronic components and mechanical parts of office automation (OA) equipment and the like. Such shock-absorbing packing materials, in some cases, should be free from dust and static electricity. An application in such cases involves use of an in-mold expanded molded product comprising expanded polypropylene resin particles having an antistatic property.

An antistatic property is imparted to an in-mold expanded molded product typically by (i) a method of applying a surface active agent to a surface of an in-mold expanded molded product or (ii) a method of producing an in-mold expanded molded product from expanded particles including a resin kneaded in advance with a surface active agent.

The method of producing an in-mold expanded molded product from expanded particles including a resin kneaded in advance with a surface active agent is used more often than the method of applying a surface active agent to a surface of an in-mold expanded molded product because (i) an in-mold expanded molded product produced by the former method has a more persistent antistatic property and (ii) the former method allows operations to be simplified more easily.

Regarding expanded polypropylene resin particles having an antistatic property, there have been disclosed techniques (see, for example, Patent Literature 1) relating to expanded polypropylene resin particles that (i) contain 0.1 to 5 weight% of a nonionic surface active agent having an antistatic ability and an average molecular weight of 200 to 1000 and that (ii) has a high temperature-side heat quantity peak at a value in a range from 10 to 30 J/g on a DSC curve obtained by differential scanning calorimetry. There has also been disclosed a technique (see, for example, Patent Literatures 2 and 3) relating to expanded polypropylene resin particles produced through an aqueous dispersion system including an inorganic dispersion agent that contains 0.05 to 5 parts by weight of an antistatic agent.

Patent Literatures 1 to 3 mention, as antistatic agents or surface active agents capable of imparting an antistatic property, N,N-(2-hydroxyethyl)alkylamine, stearyl diethanolamine monostearic acid ester, hydroxyalkyl monoethanolamine, glycerine fatty acid ester and etc. (which are classified as low-molecular antistatic agents), while Patent Literature 1 makes no mention of an aliphatic diethanolamine fatty acid ester. Patent Literatures 1 to 3 also mention that any of the above low-molecular antistatic agents may be used alone and that different kinds of antistatic agents may be used in combination.

However, in a case where one of the above low-molecular antistatic agents is used alone, there is caused a problematic variation in antistatic property among different locations in an in-mold expanded molded product. This is presumably because expanded polypropylene resin particles fused to constitute the in-mold expanded molded product vary in antistatic property from one another individually.

Further, Patent Literatures 1 to 3 fail to offer a specific example in which different kinds of low-molecular antistatic agents are used in combination, and fail to disclose that such combinational use of different kinds of low-molecular antistatic agents allows expression of excellent properties as compared to a case in which one low-molecular antistatic agent is used alone.

There have been disclosed other techniques (see, for example, Patent Literature 4) of using a low-molecular antistatic agent and a high-molecular antistatic agent in combination. Patent Literature 4 describes hydrophilic polymers, some of which, for examples, polyether ester amide and a copolymer containing quaternary ammonium base described in Examples therein are a high-molecular antistatic agent.

However, even in a case where a low-molecular antistatic agent and a high-molecular antistatic agent are used

in combination, the problem of variation in antistatic property among different locations in an in-mold expanded molded product remains unsolved.

There have been disclosed other techniques (see, for example, Patent Literatures 5 and 6) of using a high-molecular antistatic agent alone so as to impart an antistatic property. However, in a case where a high-molecular antistatic agent is used alone, the high-molecular antistatic agent in an amount ten or more times as large as an amount in which a low-molecular antistatic agent is added is necessary in order for the high-molecular antistatic agent to express antistatic property equivalent to that expressed by a low-molecular antistatic agent.

Even in a case where a high-molecular antistatic agent is added in a large amount, it is difficult to uniformly disperse the high-molecular antistatic agent in polypropylene (polyolefin) resin because high-molecular antistatic agents are in nature not compatible with polypropylene (polyolefin) resin. Thus, it is impossible to solve the problem of variation in antistatic property among different locations in an in-mold expanded molded product.

Patent Literature 6 discloses a technique of adding a high-molecular antistatic agent to only a coating layer of a polyolefin resin expanded particle comprising a core layer and a coating layer. In this case, only a small amount of a high-molecular antistatic agent is needed with respect to an amount of polyolefin resin expanded particles as a whole.

However, it is difficult to uniformly disperse a high-molecular antistatic agent in polyolefin resin of the coating layer. Thus, it is impossible to solve the problem of variation in antistatic property among different locations in an in-mold expanded molded product. In addition, there is also another problem of a significant decrease in productivity of polyolefin resin expanded particles because during production of polyolefin resin expanded particles each comprising a core layer and a coating layer, (i) a step of producing polyolefin resin particles requires an extruder including a complicated mold and (ii) it is not easy to, for example, control respective thicknesses of the core layer and coating layer.

There has been disclosed techniques (see, for example, Patent Literature 7) related to polyester resin expanded particles for which different kinds of antistatic agents and a higher alcohol are used in combination as antistatic agents having an improved antistatic property.

However, although it is possible with use of such antistatic agents to produce an in-mold expanded molded product having an excellent antistatic property, it is impossible to solve the problem of variation in antistatic property among different locations in an in-mold expanded molded product. In particular, even in a case where two kinds of antistatic agents are used in combination, it is difficult to reduce variation in antistatic property in a case where one of the two kinds of antistatic agents is a glycerine fatty acid ester-based antistatic agent.

There have been disclosed techniques (see, for example, Patent Literatures 8 to 10) in which an aliphatic diethanolamine fatty acid ester and an aliphatic diethanolamine are used in combination in unfoamed polypropylene resin (polyolefin resin), even though these techniques are one not involving foaming.

However, Patent Literatures 8 to 10 each disclose a technique relating to a molded product produced by molding with completely melted resin but not a technique relating to in-mold expanded molded product produced by fusing a large number of expanded particles with one another. Patent Literatures 8 to 10 thus fail to disclose the problem of variation in antistatic property among a plurality of locations in a molded product. In particular, Patent Literatures 8 to 10 each mainly describe films for which the problem of variation in antistatic property is hardly recognized, in part because of their thin thickness.

Patent Literature 8, which discloses a technique effective at preventing smoking during molding without sacrificing an antistatic effect or slip property, neither discloses nor suggests variation in antistatic property in either the case where an aliphatic diethanolamine fatty acid ester and an aliphatic diethanolamine are used in combination or the other case.

Patent Literature 9 discloses a technique for, without impairing an antistatic effect or physical/mechanical properties, alleviating molding defects in a film that are caused by sedimentation of volatile matter. Patent Literature 9 neither discloses nor suggests variation in antistatic property in either the case in which an aliphatic diethanolamine fatty acid ester and an aliphatic diethanolamine are used in combination or the other case.

Patent Literature 10 discloses a technique related to a film for an agricultural chemical which film is excellent in anti-fogging property (for preventing fogging due to condensed water droplets) and is free from whitening or stickiness due to bleeding of an anti-fogging agent. Although Patent Literature 10 discloses using, as an anti-fogging agent, an aliphatic diethanolamine fatty acid ester and an aliphatic diethanolamine in combination, Patent Literature 10 neither discloses nor suggests an antistatic property at all.

As described above, although there have been publicly known techniques related to expanded polypropylene resin particles having a good antistatic property and a polypropylene resin in-mold expanded molded product having a good antistatic property, there have not yet been known a technique related to expanded polypropylene resin particles having reduced variation in antistatic property or a polypropylene resin in-mold expanded molded product having less locational unevenness in antistatic property.

Citation list

Patent Literature 1
Japanese Patent Application Publication, *Tokukaihei,* No. 7-304895 A
Patent Literature 2
Japanese Patent Application Publication, *Tokukaihei,* No. 8-012798 A
Patent Literature 3
Japanese Patent Application Publication, *Tokukaihei,* No. 8-092408 A
Patent Literature 4
Japanese Patent Application Publication, *Tokukai,* No. 2000-290421 A
Patent Literature 5
PCT International Publication WO2009/001645
Patent Literature 6
Japanese Patent Application Publication, *Tokukai,* No. 2009-173021 A
Patent Literature 7
Japanese Patent Application Publication, *Tokukai,* No. 2003-231770 A
Patent Literature 8
Japanese Patent Application Publication, *Tokukai,* No. 2000-007854 A
Patent Literature 9
Japanese Patent Application Publication, *Tokukai,* No. 2002-146113 A
Patent Literature 10
Japanese Patent Application Publication, *Tokukai,* No. 2002-179812 A

Summary of Invention

Technical Problem

It is an object of the present invention to (i) produce expanded polypropylene resin particles having reduced variation in antistatic property and (ii) reduce locational unevenness in antistatic property among different locations in a polypropylene resin in-mold expanded molded product produced from the expanded polypropylene resin particles.

Solution to Problem

The inventors of the present invention, in order to produce expanded polypropylene resin particles or polypropylene resin in-mold expanded molded product having reduced variation in antistatic property, conducted diligent research into a technique for reducing variation in antistatic property among different locations in a single in-mold expanded molded product. The inventors have thus found a technique for reducing variation in antistatic property even with use of conventional facility and equipment such as an extruder for dispersing an antistatic agent in polypropylene resin.
Specifically, the inventors of the present invention have found that it is possible to reduce variation in antistatic property with combinational use of, among existing numerous antistatic agents, particular antistatic agents, namely an aliphatic diethanolamine fatty acid ester and an aliphatic diethanolamine. The inventors have consequently arrived at the present invention based on the finding.
The present invention specifically encompasses expanded polypropylene resin particles, a method for producing expanded polypropylene resin particles, and a method for producing an in-mold expanded molded product.
-Expanded polypropylene resin particles comprising a polypropylene resin composition containing an aliphatic diethanolamine fatty acid ester and an aliphatic diethanolamine in a total content of not less than 0.1 part by weight but not greater than 5 parts by weight with respect to 100 parts by weight of polypropylene resin

- A method for producing expanded polypropylene resin particles, the method comprising:

  (a) a step including (i) melt-kneading, in an extruder, a polypropylene resin composition containing an aliphatic diethanolamine fatty acid ester and an aliphatic diethanolamine in a total content of not less than 0.1 part by weight but not greater than 5 parts by weight with respect to 100 parts by weight of polypropylene resin, (ii) extruding the polypropylene resin composition from an end of the extruder into a strand shape, and (iii) cutting the strand shape of the polypropylene resin composition so as to produce polypropylene resin particles; and
  (b) a step including (i) introducing, in a pressure-resistant vessel, the polypropylene resin particles, water, an

inorganic dispersion agent, and a foaming agent, (ii) dispersing the polypropylene resin particles, the inorganic dispersion agent, the foaming agent, and the water under stirring and while heating the content in the pressure-resistant vessel to a temperature not lower than a softening point of the polypropylene resin particles, so as to obtain a dispersion and (iii) releasing the dispersion in the pressure-resistant vessel to an area having a pressure lower than an internal pressure of the pressure-resistant vessel so as to produce expanded polypropylene resin particles

- A method for producing an in-mold expanded molded product, the method including the steps of (i) introducing, into a mold, expanded polypropylene resin particles comprising a polypropylene resin composition containing an aliphatic diethanolamine fatty acid ester and an aliphatic diethanolamine in a total content of not less than 0.1 part by weight but not greater than 5 parts by weight with respect to 100 parts by weight of polypropylene resin and (ii) heating the expanded polypropylene resin particles in the mold so as to produce an in-mold expanded molded product

Advantageous Effects of Invention

The expanded polypropylene resin particles of the present invention having antistatic property and the polypropylene resin in-mold expanded molded product of the present invention comprising the expanded polypropylene resin particles both are low in locational unevenness in antistatic property and in particular, the present invention achieves low locational unevenness in antistatic property among different locations in the single in-mold expanded molded product.

Brief Description of Drawings

Fig. 1 is a graph illustrating an example DSC curve obtained by differential scanning calorimetry (DSC) of raising a temperature of expanded polypropylene resin particles of the present invention from 40°C to 220°C at a heating rate of 10°C/min. The graph indicates temperature along a horizontal axis and quantity of heat absorption along a vertical axis. The graph shows Q1 to indicate an area enclosed by (i) a melting heat quantity peak on a low temperature side and (ii) a broken line for a segment A-B and Qh to indicate an area enclosed by (i) a melting heat quantity peak on a high temperature side and (ii) a broken line for a segment A-C.

Fig. 2 is a diagram illustrating locations (No. 1 to 10) for measurement of surface inherent resistance values on a surface of each of in-mold expanded molded products produced in Examples and Comparative Examples which surface has a length of 400 mm and a width of 300 mm.

Fig. 3 is a diagram schematically illustrating placement of a screw tube and a glass plate for fogging evaluation in the Examples and Comparative Examples.

Description of Embodiments

Polypropylene resin for use in the present invention is not particularly limited. Examples of the polypropylene resin encompass a polypropylene homopolymer, an ethylene/propylene random copolymer, a butene-1/propylene random copolymer, an ethylene/butene-1/propylene random copolymer, an ethylene/propylene block copolymer, a butene-1/propylene block copolymer, a propylene-chlorinated vinyl copolymer, and a propylene/maleic anhydride copolymer. Among these, an ethylene/propylene random copolymer and an ethylene/butene-1/propylene random copolymer are more preferably because they have good foamability and good moldability. Note that the expression "butene-1" is equal in meaning to "1-butene".

The ethylene/propylene random copolymer and the ethylene/butene-1/propylene random copolymer each preferably have an ethylene content of not less than 0.2 weight% but not greater than 10 weight% with respect to 100 weight% of the copolymer.

The ethylene/butene-1/propylene random copolymer preferably has a butene content of not less than 0.2 weight% but not greater than 10 weight% with respect to 100 weight% of the copolymer. The ethylene/butene-1/propylene random copolymer preferably has a total content of ethylene and butene-1 of not less than 0.5 weight% but not greater than 10 weight%.

In a case where the copolymers have an ethylene or butene-1 content of less than 0.2 weight%, the copolymers tend to have lower foamability and/or lower moldability. In a case where the copolymers have an ethylene or butene-1 content of greater than 10 weight%, the copolymer tend to have lower mechanical property.

A melting point of the polypropylene resin for use in the present invention is not particularly limited. The melting point is, for example, preferably (i) not less than 125°C but not greater than 160°C, more preferably (ii) not less than 130°C but not greater than 155°C, most preferably (iii) not less than 148°C but not greater than 153°C. A polypropylene

resin with a melting point of less than 125°C tends to be low in heat resistance. For a polypropylene resin with a melting point of greater than 160°C, it tends to be difficult to increase an expanding ratio of the polypropylene resin.

The melting point of the polypropylene resin is measured by differential scanning calorimetry (hereinafter referred to as "DSC"). Specifically, the melting point is found as a melting peak temperature in a second temperature rise on a DSC curve obtained by (i) raising a temperature of 5 to 6 mg of the polypropylene resin from 40°C to 220°C at a heating rate of 10°C/min so as to melt the polypropylene resin, (ii) lowering the temperature from 220°C to 40°C at a cooling rate of 10°C/min so as to crystallize the polypropylene resin, and then (iii) raising the temperature again from 40°C to 220°C at a heating rate of 10°C/min.

A crystal melting heat quantity of the polypropylene resin for use in the present invention is not particularly limited. The crystal melting heat quantity is preferably (i) not less than 50 J/g but not greater than 110 J/g, more preferably (ii) not less than 75 J/g but not greater than 100 J/g, most preferably (iii) not less than 85 J/g but not greater than 95 J/g because the crystal melting heat quantity in this range allows good foamability to be achieved and the effect of the present invention to be produced significantly. In a case where the crystal melting heat quantity is less than 50 J/g, it is difficult to maintain a shape of foamed resin particles. In a case where the crystal melting heat quantity is greater than 110 J/g, it is difficult to increase the expanding ratio of the polypropylene resin.

The crystal melting heat quantity relates to an amount of crystal in the polypropylene resin. The larger the crystal melting heat quantity, the larger the amount of crystal. It is known that surface migration of an antistatic agent is normally inhibited more in a polypropylene resin having a larger amount of crystal than in a polypropylene resin having a smaller amount of crystal (reference: Application and Evaluation of Antistatic Materials (*Taiden Boushi Zairyou no Ouyou to Hyouka Gijutu),* edited by Yuji Murata, CMC Publishing Co., Ltd., 2003). This means that in a case where a polypropylene resin having a smaller amount of crystal is used, an antistatic property will be better.

However, the expanded polypropylene resin particles of the present invention, in which two specific antistatic agents are used in combination, tend to have better antistatic property in a case where a polypropylene resin having a larger amount of crystal is used. This is contrary to general knowledge, and is a surprising feature.

The crystal melting heat quantity of the polypropylene resin is measured by DSC herein. Specifically, the crystal melting heat quantity is found as a quantity of heat on a DSC curve obtained by (i) raising a temperature of 5 mg to 6 mg of the polypropylene resin from 40°C to 220°C at a heating rate of 10°C/min so as to melt the polypropylene resin, (ii) lowering the temperature from 220°C to 40°C at a cooling rate of 10°C/min so as to crystallize the polypropylene resin, and then (iii) raising the temperature again from 40°C to 220°C at a heating rate of 10°C/min, the quantity of heat being indicated by an area enclosed by the DSC curve and a tangent that extends from (i) a position at a melting peak in a second temperature rise at which position a bottom of the melting peak on a high temperature side returns to a baseline to (ii) a bottom of the melting peak on a low temperature side.

A melt index (hereinafter referred to as "MI") of the polypropylene resin for use in the present invention is not particularly limited. The MI is preferably (i) not less than 3 g/ 10 min but not greater than 30 g/10 min, more preferably (ii) not less than 4 g/10 min but not greater than 20 g/10 min, further preferably (iii) not less than 5 g/10 min but not greater than 18 g/10 min.

In a case where the MI of the polypropylene resin is less than 3 g/10 min, it tends to be difficult to increase an expanding ratio of the polypropylene resin. In a case where the MI of the polypropylene resin is greater than 30 g/10 min, cells in the expanded polypropylene resin particles produced tend to be continuous with one another. This results in a decrease in compressive strength or surface property of a produced polypropylene resin in-mold expanded molded product.

In a case where the MI of the polypropylene resin is in a range of not less than 3 g/ 10 min but not greater than 30 g/10 min, it is easy to produce expanded polypropylene resin particles having a relatively large expanding ratio. Further, in a case where a polypropylene resin in-mold expanded molded product is produced by molding such expanded polypropylene resin particles by in-mold foaming, the polypropylene resin in-mold expanded molded product has excellent surface appearance and a low rate of dimensional shrinkage.

The MI has a value measured with use of an MI measuring instrument described in JIS K7210:1999 and under a condition involving (i) an orifice having a diameter of 2.0959 $\pm$ 0.005 mm and a length of 8.000 $\pm$ 0.025 mm, (ii) a load of 2160 g, and (iii) a temperature of 230°C $\pm$ 0.2°C.

A polymerization catalyst for use in synthesizing the polypropylene resin for use in the present invention is not particularly limited, and may be a Ziegler catalyst or metallocene catalyst, for example.

The present invention requires use of an aliphatic diethanolamine fatty acid ester and an aliphatic diethanolamine. In this case, it is possible to reduce variation in antistatic property of expanded polypropylene resin particles produced and an in-mold expanded molded product comprising the expanded polypropylene resin particles. In other words, it is possible to solve the problem to be solved in the present invention. In a case where only one of an aliphatic diethanolamine fatty acid ester and an aliphatic diethanolamine is used, expanded polypropylene resin particles produced and an in-mold expanded molded product comprising the expanded polypropylene resin particles are, although able to display an antistatic property, do not have reduced variation in antistatic property.

A polypropylene resin composition for use in the present invention has a total content of an aliphatic diethanolamine fatty acid ester and an aliphatic diethanolamine of (i) not less than 0.1 part by weight but not greater than 5 parts by weight, more preferably (ii) not less than 0.3 part by weight but not greater than 3 parts by weight, further preferably (iii) not less than 0.5 part by weight but not greater than 1.5 parts by weight, each with respect to 100 parts by weight of the polypropylene resin.

In a case where the total content of an aliphatic diethanolamine fatty acid ester and an aliphatic diethanolamine is less than 0.1 part by weight, the antistatic property becomes more difficult to achieve. In a case where the total content of an aliphatic diethanolamine fatty acid ester and an aliphatic diethanolamine is greater than 5 parts by weight, the effect of reducing variation in antistatic property is saturated, while expanded polypropylene resin particles produced and a polypropylene resin in-mold expanded molded product produced have sticky surfaces and, the later-described extraction of polypropylene resin particles with use of an extruder becomes such that an extrusion discharge quantity becomes unstable so that the polypropylene resin particles produced tend to vary individually in particle shape and weight.

Note that in a case where the total content is greater than 3 parts by weight with respect to 100 parts by weight of the polypropylene resin, an aliphatic diethanolamine fatty acid ester and an aliphatic diethanolamine volatilize in larger amounts. This may deteriorate a staining property (fogging property) of expanded polypropylene resin particles produced or a polypropylene resin in-mold expanded molded product produced.

In the present invention, which uses an aliphatic diethanolamine fatty acid ester and an aliphatic diethanolamine, a weight proportion of the aliphatic diethanolamine fatty acid ester with respect to a total weight of the aliphatic diethanolamine fatty acid ester and the aliphatic diethanolamine is not particularly limited. The weight proportion of the aliphatic diethanolamine fatty acid ester is preferably (i) not less than 5 weight% but not greater than 95 weight%, more preferably (ii) not less than 20 weight% but not greater than 95 weight%, further preferably (iii) not less than 40 weight% but not greater than 95 weight%, each with respect to 100 weight% of the total weight of the aliphatic diethanolamine fatty acid ester and the aliphatic diethanolamine. In a case where the weight proportion of the aliphatic diethanolamine fatty acid ester is not less than 5 weight% but not greater than 95 weight%, it is possible to further reduce variation in antistatic property of expanded polypropylene resin particles produced and a polypropylene resin in-mold expanded molded product produced.

The aliphatic diethanolamine fatty acid ester for use in the present invention is not particularly limited. In order to (i) allow expanded polypropylene resin particles produced and a polypropylene resin in-mold expanded molded product produced to express antistatic property sufficiently and have no surface stickiness and to (ii) avoid promoting deterioration of resin, the aliphatic diethanolamine fatty acid ester is preferably a compound represented by General Formula (1):

[Chem. 1]

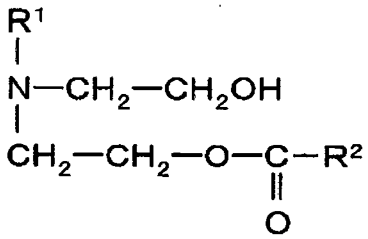

... General Formula (1)

where $R^1$ is a C12 to C24 alkyl group, $R^2$ is a C11 to C23 alkyl group, and $R^1$ and $R^2$ may be identical to or different from each other.

The aliphatic diethanolamine fatty acid ester may be composed solely of the single compound containing the predetermined $R^1$ and $R^2$, or may be a mixture of a plurality of compounds represented by General Formula (1). The number of carbon atoms of at least one of $R^1$ and $R^2$ in their compounds is different.

Specific examples of the aliphatic diethanolamine fatty acid ester of the present invention encompass:

lauryl diethanolamine monolauric acid ester, lauryl diethanolamine monomyristic acid ester, lauryl diethanolamine monopentadecylic acid ester, lauryl diethanolamine monopalmitic acid ester, lauryl diethanolamine monomargaric acid ester, lauryl diethanolamine monostearic acid ester, lauryl diethanolamine monoarachidic acid ester, lauryl diethanolamine monobehenic acid ester, and lauryl diethanolamine monolignoceric acid ester;

myristyl diethanolamine monolauric acid ester, myristyl diethanolamine monomyristic acid ester, myristyl diethanolamine monopentadecylic acid ester, myristyl diethanolamine monopalmitic acid ester, myristyl diethanolamine monomargaric acid ester, myristyl diethanolamine monostearic acid ester, myristyl diethanolamine monoarachidic acid ester, myristyl diethanolamine monobehenic acid ester, myristyl diethanolamine monolignoceric acid ester;

pentadecyl diethanolamine monolauric acid ester, pentadecyl diethanolamine monomyristic acid ester, pentadecyl diethanolamine monopentadecylic acid ester, pentadecyl diethanolamine monopalmitic acid ester, pentadecyl diethanolamine monomargaric acid ester, pentadecyl diethanolamine monostearic acid ester, pentadecyl diethanolamine monoarachidic acid ester, pentadecyl diethanolamine monobehenic acid ester, and pentadecyl diethanolamine monolignoceric acid ester;
palmityl diethanolamine monolauric acid ester, palmityl diethanolamine monomyristic acid ester, palmityl diethanolamine monopentadecylic acid ester, palmityl diethanolamine monopalmitic acid ester, palmityl diethanolamine monomargaric acid ester, palmityl diethanolamine monostearic acid ester, palmityl diethanolamine monoarachidic acid ester, palmityl diethanolamine monobehenic acid ester, and palmityl diethanolamine monolignoceric acid ester;
margaryl diethanolamine monolauric acid ester, margaryl diethanolamine monomyristic acid ester, margaryl diethanolamine monopentadecylic acid ester, margaryl diethanolamine monopalmitic acid ester, margaryl diethanolamine monomargaric acid ester, margaryl diethanolamine monostearic acid ester, margaryl diethanolamine monoarachidic acid ester, margaryl diethanolamine monobehenic acid ester, and margaryl diethanolamine monolignoceric acid ester;
stearyl diethanolamine monolauric acid ester, stearyl diethanolamine monomyristic acid ester, stearyl diethanolamine monopentadecylic acid ester, stearyl diethanolamine monopalmitic acid ester, stearyl diethanolamine monomargaric acid ester, stearyl diethanolamine monostearic acid ester, stearyl diethanolamine monoarachidic acid ester, stearyl diethanolamine monobehenic acid ester, and stearyl diethanolamine monolignoceric acid ester;
arachidyl diethanolamine monolauric acid ester, arachidyl diethanolamine monomyristic acid ester, arachidyl diethanolamine monopentadecylic acid ester, arachidyl diethanolamine monopalmitic acid ester, arachidyl diethanolamine monomargaric acid ester, arachidyl diethanolamine monostearic acid ester, arachidyl diethanolamine monoarachidic acid ester, arachidyl diethanolamine monobehenic acid ester, and arachidyl diethanolamine monolignoceric acid ester;
behenyl diethanolamine monolauric acid ester, behenyl diethanolamine monomyristic acid ester, behenyl diethanolamine monopentadecylic acid ester, behenyl diethanolamine monopalmitic acid ester, behenyl diethanolamine monomargaric acid ester, behenyl diethanolamine monostearic acid ester, behenyl diethanolamine monoarachidic acid ester, behenyl diethanolamine monobehenic acid ester, and behenyl diethanolamine monolignoceric acid ester;
lignoceryl diethanolamine monolauric acid ester, lignoceryl diethanolamine monomyristic acid ester, lignoceryl diethanolamine monopentadecylic acid ester, lignoceryl diethanolamine monopalmitic acid ester, lignoceryl diethanolamine monomargaric acid ester, lignoceryl diethanolamine monostearic acid ester, lignoceryl diethanolamine monoarachidic acid ester, lignoceryl diethanolamine monobehenic acid ester, and lignoceryl diethanolamine monolignoceric acid ester.

Any of these may be used alone, or two or more of these may be used in combination.

Among the above aliphatic diethanolamine fatty acid esters, stearyl diethanolamine monostearic acid ester (where $R^1 = -(CH_2)_{17}CH_3$, and $R^2 = -(CH_2)_{16}CH_3$) is more preferable for good compatibility with the polypropylene resin and ease of achieving the effect of reducing variation in antistatic property.

The aliphatic diethanolamine for use in the present invention is not particularly limited. In order to (i) allow expanded polypropylene resin particles produced and a polypropylene resin in-mold expanded molded product produced to express antistatic property sufficiently and have no surface stickiness and to (ii) avoid accelerating deterioration of resin, the aliphatic diethanolamine is preferably a compound represented by General Formula (2):

[Chem. 2]

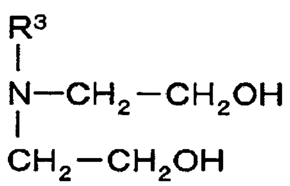

... General Formula (2)

where $R^3$ is a C12 to C24 alkyl group.

The aliphatic diethanolamine may be composed solely of the single compound containing the predetermined $R^3$, or may be a mixture of a plurality of compounds represented by General Formula (2). The number of carbon atoms of $R^3$ in their compounds is different.

Specific examples of the aliphatic diethanolamine of the present invention encompass lauryl diethanolamine, myristyl diethanolamine, pentadecyl diethanolamine, palmityl diethanolamine, margaryl diethanolamine, stearyl diethanolamine, arachidyl diethanolamine, behenyl diethanolamine, and lignoceryl diethanolamine. Any of these may be used alone, or two or more of these may be used in combination.

Among the above aliphatic diethanolamines, stearyl diethanolamine (where $R^3 = -(CH_2)_{17}CH_3$) is more preferable for good compatibility with the polypropylene resin, ease of achieving a synergistic effect with stearyl diethanolamine monostearic acid ester, and ease of achieving the effect of reducing variation in antistatic property.

The present invention is not particularly limited in terms of combination in kind of the aliphatic diethanolamine fatty acid ester and the aliphatic diethanolamine. In order to reduce variation in antistatic property, a combination of the compound represented by General Formula (1) and the compound represented by General Formula (2) is preferable, and in particular, a combination of stearyl diethanolamine monostearic acid ester and stearyl diethanolamine is most preferable.

In addition, the polypropylene resin composition of the present invention preferably further contains an aliphatic alcohol in an amount of not less than 0.001 part by weight but not greater than 2 parts by weight with respect to 100 parts by weight of the polypropylene resin, in order to improve antistatic property and reduce staining property (fogging property).

The aliphatic alcohol is not particularly limited. The aliphatic alcohol is suitably a compound represented by General Formula (3) for reduced staining property (fogging property).

[Chem. 3]

$$R^4\text{-}O^H \ldots \qquad \text{General Formula (3)}$$

where $R^4$ is a C12 to C24 alkyl group.

The aliphatic alcohol may be composed solely of the single compound containing the predetermined $R^4$, or may be a mixture of a plurality of compounds represented by General Formula (3). The number of carbon atoms $R^4$ in their compounds is different.

Specific examples of the aliphatic alcohol of present invention encompass lauryl alcohol, myristyl alcohol, pentadecyl alcohol, palmityl alcohol, margaryl alcohol, stearyl alcohol, arachidyl alcohol, behenyl alcohol, and lignoceryl alcohol. Any of these may be used alone, or two or more of these may be used in combination.

Among the above aliphatic alcohols, stearyl alcohol ($R^4 = -(CH_2)_{17}CH_3$) is preferable for good compatibility with the stearyl diethanolamine monostearic acid ester and the stearyl diethanolamine, improved antistatic property, and reduced staining property (fogging property).

It is also possible to (i) prepare in advance, with use of resin that is identical to or different from the polypropylene resin serving as a main component of the polypropylene resin composition, a masterbatch including the aliphatic diethanolamine fatty acid ester, the aliphatic diethanolamine, and (as necessary) the aliphatic alcohol and (ii) mix the masterbatch with the polypropylene resin.

Further, it is also possible to mix in advance the aliphatic diethanolamine fatty acid ester, the aliphatic diethanolamine, and (as necessary) the aliphatic alcohol with one another before they are contained in the polypropylene resin.

The polypropylene resin composition of the present invention can further include any of various additives provided that the effect of the present invention is not impaired. Such additives encompass, for example, an organic pigment, an antioxidant, a light resistance improving agent, an expansion nucleus agent, a flame retarder, and a water-absorbing compound.

The organic pigment may be, but not limited to, a perylene organic pigment, a polyazo organic pigment, or a quinacridone organic pigment, for example.

The organic pigment is preferably contained in an amount of not less than 0.001 part by weight but not greater than 0.1 part by weight with respect to 100 parts by weight of the polypropylene resin for better dispersibility (coloring uniformity) and better antistatic property. In a case where the organic pigment is contained in an amount of greater than 0.1 part by weight, expanded polypropylene resin particles produced each have an extremely small cell diameter, and a polypropylene resin in-mold expanded molded product produced from such expanded polypropylene resin particles has poor surface property. Such a polypropylene resin in-mold expanded molded product tends to be unattractive in appearance.

It is also possible to (i) prepare in advance, with use of resin that is identical to or different from the polypropylene resin serving as a main component of the polypropylene resin composition, a masterbatch including the above organic pigments and (ii) mix the masterbatch with the polypropylene resin.

The antioxidant may be, but not limited to, a phenol antioxidant or a phosphorus-based antioxidant, for example.

The light resistance improving agent may be, but not limited to, a hindered amine light resistance improving agent, for example.

The expansion nucleus agent may be, but not limited to, talc, kaolin, barium sulfate, zinc borate, or silicon dioxide, for example.

The flame retarder may be, but not limited to, a halogen flame retarder, a phosphorus-based flame retarder,

or a hindered amine flame retarder, for example.

The water-absorbing compound is, for example, a substance that can absorb water and release the absorbed water to allow the water to act as a foaming agent in foaming the polypropylene resin composition. Specific examples of the water-absorbing compound are polyethyleneglycol, glycerin, and melamine, but the water-absorbing compound is not limited thereto. The water-absorbing compound is, among the above water-absorbing compounds, more preferably polyethyleneglycol, most preferably polyethyleneglycol having an average molecular weight of not less than 200 but not greater than 6000.

In order that the polypropylene resin composition of the present invention is easy to be used in foam, it is normally preferable that the polypropylene resin composition of the present invention is melt-kneaded in advance with use of an extruder, a kneader, a Banbury mixer, a roller or the like and processed into polypropylene resin particles in a desired particle shape such as a columnar shape, an ellipsoidal shape, a spherical shape, a cubic shape, a rectangular shape, or a tube (straw) shape.

The shape of the polypropylene resin particles is not necessarily maintained so as to be identical to that of expanded polypropylene resin particles produced. The polypropylene resin particles may, for example, shrink during a foaming step. In such a case, polypropylene resin particles having a columnar or ellipsoidal shape may result in expanded polypropylene resin particles each having a spherical shape.

In terms of productivity, the polypropylene resin particles are more preferably produced through, among other methods, a method including (i) melt-kneading the polypropylene resin in an extruder, (ii) extruding the polypropylene resin from an end of the extruder in a strand shape, and (iii) cutting the strand of the polypropylene resin into polypropylene resin particles.

During the process of producing the polypropylene resin particles, it is normally preferable that the aliphatic diethanolamine fatty acid ester, the aliphatic diethanolamine, (as necessary) the aliphatic alcohol, and other additives are added to the polypropylene resin before or after the polypropylene resin is melted and that a resultant mixture is then melt-kneaded in an extruder. With this arrangement, it is possible to uniformly disperse the aliphatic diethanolamine fatty acid ester, the aliphatic diethanolamine, (as necessary) the aliphatic alcohol, and other additives in the polypropylene resin.

The polypropylene resin particles of the present invention have an average particle size of preferably (i) not less than 0.1 mm but not greater than 10 mm, more preferably (ii) not less than 0.5 mm but not greater than 5 mm. This average particle diameter of the polypropylene resin particles is an arithmetic average value of respective particle diameters of 20 random polypropylene resin particles.

The polypropylene resin particles of the present invention have an average weight of preferably (i) not less than 0.1 mg but not greater than 100 mg, more preferably (ii) not less than 0.3 mg but not greater than 10 mg. This average weight is an arithmetic average value of respective weights of 10 random polypropylene resin particles.

The expanded polypropylene resin particles of the present invention can be produced as follows:

> The expanded polypropylene resin particles can be produced by, for example, (i) containing, in a pressure-resistant vessel, materials such as the polypropylene resin particles, an aqueous medium, an inorganic dispersion agent, and a foaming agent, (ii) dispersing the materials under stirring thereby obtaining a dispersion liquid, (iii) raising a temperature of the dispersion liquid, to a temperature not lower than a softening point of the polypropylene resin particles, (iv) as necessary retaining the dispersion for a time period longer than 0 minute but not longer than 120 minutes at a temperature as raised, and then (v) releasing the dispersion in the pressure-resistant vessel to an area having a pressure lower than an internal pressure of the pressure-resistant vessel. The area having a pressure lower than the internal pressure of the pressure-resistant vessel is preferably an area having atmospheric pressure.

The description herein refers to the above foaming step as "first-stage foaming step" and to expanded polypropylene resin particles produced through the first-stage foaming step as "first-stage expanded particles". The above dispersion liquid is a mixture liquid prepared by (i) containing, in a pressure-resistant vessel, materials such as the polypropylene resin particles, an aqueous medium, an inorganic dispersion agent, and a foaming agent and (ii) stirring a mixture of the materials for dispersion thereof.

For the sake of reliable foamability, the raising the temperature inside the pressure-resistant vessel to a temperature not lower than the softening point of the polypropylene resin particles is preferably carried out in such a way that the temperature is raised to a target temperature within (i) a range from (a temperature lower than the melting point of the polypropylene resin by 20°C) to (a temperature higher than the melting point of the polypropylene resin by 10°C) or within (ii) a range from (a temperature lower than the melting point of the polypropylene resin particles by 20°C) to (a temperature higher than the melting point of the polypropylene resin particles by 10°C). The target temperature is selected as appropriate depending on, for example, a kind of the polypropylene resin serving as raw material, an expanding ratio, DSC ratio described below, etc. The target temperature is also changed as appropriate depending on a foaming agent to be used.

The melting point of the polypropylene resin particles is measured by DSC. Specifically, the melting point is found as a melting peak temperature in a second temperature rise on a DSC curve obtained by (i) raising a temperature of 5 to 6 mg of the polypropylene resin particles from 40°C to 220°C at a heating rate of 10°C/min so as to melt the polypropylene resin particles, (ii) lowering the temperature from 220°C to 40°C at a cooling rate of 10°C/min so as to crystallize the polypropylene resin particles, and then (iii) raising the temperature again from 40°C to 220°C at a heating rate of 10°C/min.

The area having a pressure lower than the internal pressure of the pressure-resistant vessel is preferably an area having atmospheric pressure.

Examples of the aqueous medium for use in the present invention encompass water, alcohol, ethylene glycol, and glycerin. Any of these may be used alone or in combination. Water is preferably used, most preferably alone, for better foamability, working efficiency, and safety, for example.

The aqueous medium is contained in an amount of preferably (i) not less than 50 parts by weight but not greater than 500 parts by weight, more preferably (ii) not less than 100 parts by weight but not greater than 350 parts by weight with respect to 100 parts by weight of the polypropylene resin particles.

Examples of the inorganic dispersion agent for use in the present invention encompass tertiary calcium phosphate, tertiary magnesium phosphate, basic magnesium carbonate, calcium carbonate, basic zinc carbonate, aluminum oxide, iron oxide, titanium oxide, aluminosilicate, kaolin, and barium sulfate. Any of these may be used alone, or two or more of these may be used in combination. The inorganic dispersion is, among the above inorganic dispersion agents, preferably tertiary calcium phosphate, kaolin, or barium sulfate for better stability of the resulting dispersion.

In a case where the stability of the dispersion is decreased, a plurality of polypropylene resin particles may adhere to one another or form lumps in the pressure-resistant vessel. In this case, expanded polypropylene resin particles adhering to one another are produced, or lumps of polypropylene resin particles remain in the pressure-resistant vessel. As a result, it may be impossible to produce expanded polypropylene resin particles, or there may be a decrease in productivity of expanded polypropylene resin particles.

The present invention preferably further uses a dispersion auxiliary agent for improved stability of the dispersion in the pressure-resistant vessel. Examples of the dispersion auxiliary agent encompass sodium dodecyl benzene sulfonate, sodium alkane sulfonate, sodium alkyl sulfonate, sodium alkyl diphenyl ether disulfonate, and sodium $\alpha$-olefin sulfonate. Any of these may be used alone, or two or more of these may be used in combination.

The inorganic dispersion agent and the dispersion auxiliary agent are each contained in an amount that depends on, for example, (i) a kind thereof or (ii) the kind and amount of the polypropylene resin particles to be used. Normally, with respect to 100 parts by weight of the aqueous medium, (i) the inorganic dispersion agent is contained in an amount of preferably not less than 0.1 part by weight but not greater than 5 parts by weight, and (ii) the dispersion auxiliary agent is contained in an amount of preferably not less than 0.001 part by weight but not greater than 0.3 part by weight.

Examples of the foaming agent for use in the present invention encompass (i) organic foaming agents such as propane, normal butane, isobutane, normal pentane, isopentane, hexane, cyclopentane, and cyclobutane and (ii) inorganic foaming agents such as carbon dioxide, water, air, and nitrogen. Any of these foaming agents may be used alone, or two or more of these foaming agents may be used in combination. Among the above foaming agents, (i) isobutane and normal butane are more preferable for ease of improving the expanding ratio, and (ii) inorganic foaming agents such as carbon dioxide, water, air, and nitrogen are preferable, more preferably a foaming agent containing carbon dioxide, for better safety and better environmental adaptability.

In the present invention, an amount of the foaming agent is not limited. The foaming agent is contained as appropriate according to a desired expanding ratio for expanded polypropylene resin particles to be produced. The foaming agent is normally contained in an amount of preferably not less than 2 parts by weight but not greater than 60 parts by weight with respect to 100 parts by weight of the polypropylene resin particles.

In a case where water is used as the foaming agent, it is possible to utilize water serving as the aqueous medium for dispersing the polypropylene resin particles in the pressure-resistant vessel. In the case where water is used as the foaming agent as such, containing a water-absorbing compound in the polypropylene resin particles in advance makes it easy for the polypropylene resin particles to absorb the water in the pressure-resistant vessel. As a result, it becomes easy to utilize water as the foaming agent.

The pressure-resistant vessel for use in producing the expanded polypropylene resin particles is not particularly limited provided that the pressure-resistant vessel is capable of resisting a pressure and temperature inside the vessel. Examples of the pressure-resistant vessel encompass an autoclave-type pressure-resistant vessel.

In order to produce expanded polypropylene resin particles having a high expanding ratio, an organic foaming agent such as isobutane and normal butane can be selected as the foaming agent for the first-stage foaming step, or the foaming agent can be contained in a large amount. Alternatively, it is also possible to increase the expanding ratio by (i) producing expanded polypropylene resin particles (first-stage expanded particles) having a relatively low foaming ratio (expanding ratio of approximately 2 to 35 times) through the first-stage foaming step and then (ii) foaming the produced expanded polypropylene resin particles again.

It is possible to increase the expanding ratio by, for example, (i) performing the first-stage foaming step of producing first-stage expanded particles having an expanding ratio of not less than 2 times but not greater than 35 times through, (ii) feeding the first-stage expanded particles into a pressure-resistant vessel, (iii) applying a pressure of not less than 0.1 MPa (gage pressure) but not greater than 0.6 MPa (gage pressure) to the first-stage expanded particles with use of nitrogen, air, carbon dioxide or the like so as to increase a pressure inside the first-stage expanded particles over atmospheric pressure, and (iii) heating the first-stage expanded particles with use of steam or the like so as to further foam the first-stage expanded particles. Herein, the further foaming step is referred to as "second-stage foaming step" and expanded polypropylene resin particles produced through the second-stage foaming step are referred to as "second-stage expanded particles".

The expanded polypropylene resin particles of the present invention each are preferably in a spherical or substantially spherical shape for better filling of a mold during in-mold foaming molding. The shape of the expanded polypropylene resin particles is, however, not limited to such shapes. There is, for example, a case of intentionally producing an in-mold expanded molded product having voids so as to impart sound absorbing property and/or water permeability to the in-mold expanded molded product. Such a case involves use of expanded polypropylene resin particles in a columnar shape, an ellipsoidal shape, a rectangular shape, or a tube (straw) shape.

In a case where the expanded polypropylene resin particles of the present invention each have a spherical or substantially spherical shape, an average diameter (particle diameter) of the expanded polypropylene resin particles is not particularly limited. The average diameter is selected depending on, for example, a size of polypropylene resin particles before being foamed, an expanding ratio, etc. The average diameter is preferably (i) not less than 0.5 mm but not greater than 10 mm, more preferably (ii) not less than 1 mm but not greater than 7 mm, further preferably (iii) not less than 2 mm but not greater than 5 mm. This average diameter of the expanded polypropylene resin particles is an arithmetic average value of respective diameters of any 20 particles of the expanded polypropylene resin particles.

In a case where the average diameter of the expanded polypropylene resin particles is less than 0.5 mm, it tends to decrease working efficiency during in-mold foaming molding. In a case where the average diameter of the expanded polypropylene resin particles is greater than 10 mm, it tends to impose a restriction to a shape of a molded product to be produced, the restriction being, for example, not to allow ability to producing a molded product including a thin wall portion.

The expanded polypropylene resin particles have an average weight substantially equal to that of the polypropylene resin particles. The average weight of the expanded polypropylene resin particles is preferably (i) not less than 0.1 mg per particle but not greater than 100 mg per particle, more preferably (ii) not less than 0.3 mg per particle but not greater than 10 mg per particle. This average weight of the expanded polypropylene resin particles is an arithmetic average value of respective weights of any 10 particles of expanded polypropylene resin particles.

The expanded polypropylene resin particles of the present invention have an expanding ratio of preferably (i) not less than 2 times but not greater than 60 times, more preferably (ii) not less than 3 times but not greater than 40 times. This expanding ratio of the expanded polypropylene resin particles is a true expanding ratio calculated from (i) a density of the polypropylene resin composition before being foamed, (ii) the weight of the expanded polypropylene resin particles, and (iii) a submergence volume of the expanded polypropylene resin particles.

The expanded polypropylene resin particles of the present invention preferably have, as illustrated in Fig. 1, two melting peaks on a DSC curve obtained by heat quantity measurement performed by DSC. Here, a ratio of (i) the quantity of heat at the melting peak based on the melting point on the high temperature side to (ii) a total quantity of heat at the two melting peaks, that is, (Qh / (Ql + Qh)) x 100 (%) (herein sometimes referred to as "DSC ratio"), is preferably (i) not less than 10% but not greater than 50%, more preferably (ii) not less than 15% but not greater than 45%, where Q1 indicates a quantity of heat (J/g) at the melting peak based on a melting point on a low temperature side and Qh indicates a quantity of heat (J/g) at the melting peak based on a melting point on a high temperature side. In a case where the DSC ratio is within the above range, molding can easily have a wide range of processing conditions.

The DSC curve is a curve obtained by raising a temperature of 5 to 6 mg of the expanded polypropylene resin particles from 40°C to 220°C at a heating rate of 10°C/min by DSC. An example of such a DSC curve is illustrated in Fig. 1.

The quantity of heat Q1 at the melting peak based on the melting point on the low temperature side is a quantity of heat indicated by an area enclosed by (1) the melting peak based on the melting point on the low temperature side on the DSC curve and (2) a tangent (segment A-B) extending, to a baseline from which melting starts, from a maximum point between (i) the melting peak based on the melting point on the low temperature side and (ii) the melting peak based on the melting point on the high temperature side. The quantity of heat Qh at the melting peak based on the melting point on the high temperature side is a quantity of heat indicated by an area enclosed by (1) the melting peak based on the melting point on the high temperature side on the DSC curve and (2) a tangent (segment A-C) extending, to a baseline at which melting ends, from a maximum point between (i) the melting peak based on the melting point on the low temperature side and (ii) the melting peak based on the melting point on the high temperature side.

The DSC ratio can be adjusted by changing (i) the target temperature, up to which the temperature inside the pressure-resistant vessel is to be raised during the foaming step, or (ii) the retention time period, during which the

dispersion liquid in the pressure-resistant vessel is retained at the target temperature, ranging from an end of the raising of the target temperature to a release of the dispersion liquid. For example, in a case where the target temperature (foaming temperature) is lower, the DSC ratio tends to be larger, and in a case where the retention time period is longer, the DSC ratio also tends to be larger.

Thus, by conducting the above experiments with different target temperatures (foaming temperatures) and retention time periods so as to understand in advance a relation between the target temperature (foaming temperature) and the DSC ratio and a relation between the retention time period and the DSC ratio, it is possible to easily produce expanded polypropylene resin particles having a desired DSC ratio.

The expanded polypropylene resin particles of the present invention are molded by general in-mold foaming so as to be a polypropylene resin in-mold expanded molded product.

The expanded polypropylene resin particles can be molded by in-mold foaming through, for example, a conventionally known method such as

(i) a method of molding the expanded polypropylene resin particles as such,
(ii) a method of injecting an inorganic gas such as air into the expanded particles in advance so as to impart a foaming ability, and
(iii) a method of filling a mold with the expanded particles in a compressed state and molding the expanded particles.

In the present invention, a polypropylene resin in-mold expanded molded product can be produced from expanded polypropylene resin particles through, for example, a method of (i) filling a closable but not sealable mold with the expanded polypropylene resin particles, (ii) heating the mold with use of steam as a heating medium at a heated steam pressure of approximately not less than 0.05 MPa (gage pressure) but not greater than 0.5 MPa (gage pressure) for approximately not less than 3 seconds but not greater than 30 seconds so as to fuse the expanded polypropylene resin particles with one another, (iii) water-cooling the mold down to a temperature that will allow prevention of deformation of a produced in-mold expanded molded product after demolding, and (iv) open the mold so as to obtain an in-mold expanded molded product.

The polypropylene resin in-mold expanded molded product thus obtained has antistatic property and is very low in variation in antistatic property among a plurality of portions thereof.

The present invention, as described above, encompasses expanded polypropylene resin particles, a method for producing expanded polypropylene resin particles, and a method for producing an in-mold expanded molded product ([1], [8], and [11] below) and further encompasses [2] to [7], [9], [10], [12], and [13] below.

[1] Expanded polypropylene resin particles comprising a polypropylene resin composition containing an aliphatic diethanolamine fatty acid ester and an aliphatic diethanolamine in a total content of not less than 0.1 part by weight but not greater than 5 parts by weight with respect to 100 parts by weight of polypropylene resin.

[2] The expanded polypropylene resin particles according to [1], wherein: the aliphatic diethanolamine fatty acid ester is a compound represented by General Formula (1) below; and the aliphatic diethanolamine is a compound represented by General Formula (2) below,

[Chem. 4]

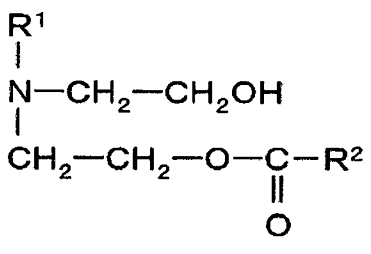

... General Formula (1)

where $R^1$ is a C12 to C24 alkyl group, $R^2$ is a C11 to C23 alkyl group, and $R^1$ and $R^2$ are optionally identical to or different from each other,

[Chem. 5]

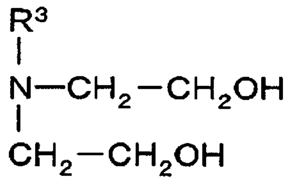

... General Formula (2)

where $R^3$ is a C12 to C24 alkyl group.

[3] The expanded polypropylene resin particles according to [2], wherein: the aliphatic diethanolamine fatty acid ester is stearyl diethanolamine monostearic acid ester; and the aliphatic diethanolamine is stearyl diethanolamine.

[4] The expanded polypropylene resin particles according to any one of [1] to [3], wherein the polypropylene resin has a crystal melting heat quantity of not less than 85 J/g but not greater than 95 J/g.

[5] The expanded polypropylene resin particles according to any one of [1] to [4], wherein the polypropylene resin composition further contains an aliphatic alcohol.

[6] The expanded polypropylene resin particles according to [5], wherein the aliphatic alcohol is a compound represented by General Formula (3) below,
[Chem. 6]

$R^4$-OH General Formula (3)

where $R^4$ is a C12 to C24 alkyl group.

[7] An in-mold expanded molded product comprising expanded polypropylene resin particles according to any one of [1] to [6].

[8] A method for producing expanded polypropylene resin particles, the method comprising:

(a) a step including (i) melt-kneading, in an extruder, a polypropylene resin composition containing an aliphatic diethanolamine fatty acid ester and an aliphatic diethanolamine in a total content of not less than 0.1 part by weight but not greater than 5 parts by weight with respect to 100 parts by weight of polypropylene resin, (ii) extruding the polypropylene resin composition from an end of the extruder into a strand shape, and (iii) cutting the strand shape of the polypropylene resin composition so as to produce polypropylene resin particles; and
(b) a step including (i) introducing, in a pressure-resistant vessel, the polypropylene resin particles, water, an inorganic dispersion agent, and a foaming agent, (ii) dispersing the polypropylene resin particles, the inorganic dispersion agent, the foaming agent, and the water under stirring and while heating the content in the pressure-resistant vessel to a temperature not lower than a softening point of the polypropylene resin particles, so as to obtain a dispersion and (iii) releasing the dispersion in the pressure-resistant vessel to an area having a pressure lower than an internal pressure of the pressure-resistant vessel so as to produce expanded polypropylene resin particles.

[9] The method according to [8], wherein the polypropylene resin used in the step (a) has a crystal melting heat quantity of not less than 85 J/g but not greater than 95 J/g.

[10] The method according to [8] or [9], wherein the polypropylene resin composition of the step (a) further contains an aliphatic alcohol.

[11] A method for producing an in-mold expanded molded product, the method including the steps of: (i) introducing, into a mold, expanded polypropylene resin particles comprising a polypropylene resin composition containing an aliphatic diethanolamine fatty acid ester and an aliphatic diethanolamine in a total content of not less than 0.1 part by weight but not greater than 5 parts by weight with respect to 100 parts by weight of polypropylene resin; and (ii) heating the expanded polypropylene resin particles in the mold so as to produce an in-mold expanded molded product.

[12] The method according to [11], wherein the polypropylene resin has a crystal melting heat quantity of not less than 85 J/g but not greater than 95 J/g.

[13] The method according to [11] or [12], wherein the polypropylene resin composition further contains an aliphatic alcohol.

[Examples]

Next, the present invention is described with reference to Examples and Comparative Examples. It should be noted, however, that the present invention is not limited to the Examples below.

The Examples and Comparative Examples used the following polypropylene resins and additives:

(1) Polypropylene Resins

- Polypropylene resin A (F227A available from Prime Polymer Co., Ltd.): An ethylene/propylene random copolymer having a melting point of 143°C, an ethylene content of 3.6 weight%, and an MI of 7.0 g/10 minutes
- Polypropylene resin B (E314M available from Prime Polymer Co., Ltd.): An ethylene/butene-1/propylene random copolymer having a melting point of 145°C, an ethylene content of 3 weight%, a butene-1 content of 1.5 weight%, and an MI of 5.0 g/10 minutes
- Polypropylene resin C (prototype available from Prime Polymer Co., Ltd.): An ethylene/butene-1/propylene random copolymer having a melting point of 148°C, an ethylene content of 1 weight%, a butene-1 content of 4 weight%, and an MI of 10.0 g/10 minutes
- Polypropylene resin D (J105G available from Prime Polymer Co., Ltd.): A propylene homopolymer having a melting point of 163°C and an MI of 9.0 g/10 minutes

(2) Antistatic Agents

- Stearyl diethanolamine monostearic acid ester (Electrostripper TS-6B available from Kao Corporation)
- Stearyl diethanolamine (reagent available from Tokyo Chemical Industry Co., Ltd.)
- Lauryl diethanolamine (reagent available from Wako Pure Chemical Industries, Ltd.)
- Electrostripper TS-11B (available from Kao Corporation): A mixture of stearyl diethanolamine monostearic acid ester and stearyl diethanolamine
- Electrostripper TS-15B (available from Kao Corporation): A mixture of stearyl diethanolamine monostearic acid ester, stearyl diethanolamine, and aliphatic alcohol

(3) Aliphatic Alcohols

- Stearyl alcohol (reagent available from Wako Pure Chemical Industries, Ltd.)
- Lauryl alcohol (reagent available from Wako Pure Chemical Industries, Ltd.)

(4) Other Main Additives

- N-hydroxyethyl-N-[2-hydroxyalkyl]amine (Dusper 125B available from Miyoshi Oil & Fat Co., Ltd.)
- Glycerin stearic acid ester (Rikemal S-100 available from Riken Vitamin Co., Ltd.)

(5) Organic Pigments

- Perylene Red (available from Dainichiseika Colour & Chemicals Mfg. Co., Ltd.)

(6) Other Additives

- Polyethyleneglycol (PEG#300 available from Lion Corporation)
- Talc (Talcum Powder PK-S available from Hayashi-Kasei Co., Ltd.)
- Melamine (available from Nissan Chemical Industries, Ltd.)

(7) Foaming Agents

- Carbon dioxide (available from Air Water Inc.)

- Isobutane (available from Mitsui Chemicals, Inc.)

Evaluations in the Examples and Comparative Examples were carried out through the following method:

(Measurement of Melting Point of Polypropylene Resin)

A melting point of the polypropylene resin was measured with use of a differential scanning calorimeter DSC (model: DSC6200, available from Seiko Instruments Inc.) as a melting peak temperature on a DSC curve obtained in a case of (i) raising a temperature of 5 to 6 mg of the polypropylene resin from 40°C to 220°C at a heating rate of 10°C/min so as to melt the polypropylene resin, (ii) lowering the temperature from 220°C to 40°C at a cooling rate of 10°C/min so as to crystallize the polypropylene resin, and (iii) raising the temperature from 40°C to 220°C at a heating rate of 10°C/min again. In other words, a melting point of the polypropylene resin was measured as a melting peak temperature in a second temperature rise.

(Expanding Ratio of Expanded Polypropylene Resin Particles)

A weight w (g) and ethanol submergence volume v ($cm^3$) of the expanded polypropylene resin particles having a bulk volume of approximately 50 $cm^3$ were measured. An expanding ratio was calculated by an expression below from a density d ($g/cm^3$) of the polypropylene resin composition before being foamed. The density d of the polypropylene resin composition was 0.9 $g/cm^3$.

$$\text{Expanding ratio of expanded polypropylene resin particles} = d \times v / w$$

(Bulk Density of Expanded Polypropylene Resin Particles)

The expanded polypropylene resin particles were introduced gently into a wide-mouthed 10-liter container until the container was overflowed with the expanded polypropylene resin particles. The expanded polypropylene resin particles were then struck at the mouth of the 10-L container so as to leave 10 liter of the expanded polypropylene resin particles. The expanded polypropylene resin particles in the 10-L container were weighed, and a measured value was divided by the capacity value of 10 liter so as to express a bulk density in a unit of g/L.

(DSC Ratio of Expanded Polypropylene Resin Particles)

A DSC curve was obtained with use of a differential scanning calorimeter DSC (model: DSC6200, available from Seiko Instruments Inc.) by raising a temperature of 5 to 6 mg of the expanded polypropylene resin particles from 40°C to 220°C at a heating rate of 10°C/min. The DSC curve had two melting peaks. With Q1 being a quantity of heat (J/g) at the melting peak based on a melting point on a low temperature side and Qh being a quantity of heat (J/g) at the melting peak based on a melting point on a high temperature side, a DSC ratio was calculated as a ratio of (i) the quantity of heat at the melting peak based on the melting point on the high temperature side to (ii) a total quantity of heat at the two melting peaks, that is, $(Qh / (Q1 + Qh)) \times 100$ (%).

(Density of In-mold Expanded Molded Product)

An in-mold expanded molded product (having a length of 400 mm, a width of 300 mm, and a thickness of 50 mm) having a rectangular shape was weighed (W(g)). Respective dimensions of the length, width, and thickness of the in-mold expanded molded product were measured with use of a vernier caliper, and a product of the dimensions was calculated so as to determine a volume V ($cm^3$) of the in-mold expanded molded product. Then, a value calculated from W/V was converted into a unit of g/L so as to determine the density of the in-mold expanded molded product.

(Measurement of Surface Inherent Resistance)

The in-mold expanded molded product produced (having a length of 400 mm, a width of 300 mm, and a thickness of 50 mm) was kept for 24 hours in a room having a temperature of 23°C and a relative humidity of 50% so as to adjust a condition of the in-mold expanded molded product. Then, surface inherent resistance of the in-mold expanded molded product was measured with use of Hiresta MCP-HT201, available from Mitsubishi Petrochemical Co., Ltd., in compliance

with JIS-K6911.

The surface inherent resistance was measured at ten locations illustrated in Fig. 2 on a surface of the single in-mold expanded molded product which surface has a length of 400 mm and a width of 300 mm.

The measurement determined not only a minimum value and a maximum value among surface inherent resistance values at the ten locations, but also an average value and a standard deviation described below.

(Average Value of Surface Inherent Resistance Values)

An average value $a_{avr}$ of surface inherent resistance values was calculated by the following Formula (1):
Math. 1

$$a_{avr} = \sqrt[n]{a_1 a_2 a_3 \cdots a_n} \quad \text{...Formula (1)}$$

where $[a_1, a_2, a_3..., a_n]$ is a set of actual values of the surface inherent resistance at the ten locations, and n = 10.

(Variation Value for Surface Inherent Resistance Values)

A variation value (standard deviation) serving as an indicator of variation among the surface inherent resistance values at the ten locations was calculated as follows: First, a standard deviation o for the surface inherent resistance values was calculated by the following Formula (2):
Math. 2

$$\sigma = \sqrt{\frac{1}{n-1}\sum_{i=1}^{n}(a_i - a_{avr})^2} \quad \text{... Formula (2)}$$

where $[a_1, a_2, a_3..., a_n]$ is a set of actual values of the surface inherent resistance, and n = 10. Next, $\sigma$ was divided by $a_{avr}$, that is, $\sigma / a_{avr}$ was calculated for definition of the variation value.

(Evaluation of Antistatic Property)

Antistatic property of the expanded molded product produced was evaluated on the basis of the following criteria:

E (Excellent): The average value of the surface inherent resistance values was less than $5 \times 10^{10}$ Ω.
G (Good): The average value of the surface inherent resistance values was not less than $5 \times 10^{10}$ Ω but less than $1 \times 10^{11}$ Ω.
A (Adequate): The average value of the surface inherent resistance values was not less than $1 \times 10^{11}$ Q but less than 1 × 1012 Ω.
P (Poor): The average value of the surface inherent resistance values was not less than $1 \times 10^{12}$ Ω.

(Evaluation of Variation in Antistatic Property)

Variation in antistatic property of the expanded molded product produced was evaluated on the basis of the following criteria:

E (Excellent): The variation value of the surface inherent resistance values was less than 0.5.
G (Good): The variation value of the surface inherent resistance values was not less than 0.5 but less than 1.
A (Adequate): The variation value of the surface inherent resistance values was not less than 1 but less than 5.
P (Poor): The variation value of the surface inherent resistance values was not less than 5.

(Evaluation of Contact Staining Property)

A glass plate (having a length of 76 mm, a width of 26 mm, and a thickness of 1 mm) for a microscope was

placed on a flat and smooth portion of the in-mold expanded molded product produced (at such a position as to avoid a mold core vent trace portion). The glass plate was left to stand for 72 hours in a room having a constant temperature of 50°C and a constant relative humidity of 90%. During this period, a 25-gram anchor was placed on the glass plate so as to accelerate staining. Next, the in-mold expanded molded product was taken out of the room, and the glass plate was removed so as to naturally dry the glass plate. Then, staining of the glass plate was observed. The staining was evaluated on the basis of the following criteria:

G (Good): Almost no visible staining transferred from a surface of the in-mold expanded molded product was observed.
A (Adequate): Visible spots of staining transferred from a surface of the in-mold expanded molded product were observed.
P (Poor): Significant staining transferred from a surface of the in-mold expanded molded product was observed.

(Evaluation of Fogging)

A 20-cc screw tube having an inner diameter of 14.5 mm was filled with expanded polypropylene resin particles and lidded with a glass plate for a microscope as illustrated in Fig. 3. The screw tube in that state was left to stand for 72 hours in a dryer (fixed-temperature constant-temperature drier NDO-450SD, available from Tokyo Rikakikai Co., Ltd.) having a controlled temperature of 40°C. Next, the screw tube was taken out of the dryer while it was lidded with the glass plate for a microscope, and naturally cooled for 24 hours. Then, staining (fogging) of the glass plate was observed. The fogging was evaluated on the basis of the following criteria:

G (Good): No dirtiness (fogging) was observed.
A (Adequate): A little dirtiness (fogging) was observed.
P (Poor): Dirtiness (fogging) was clearly observed.

(Fusion of In-mold Expanded Molded Product)

The in-mold expanded molded product produced (having a thickness of 50 mm) was notched at a center thereof in a depth of 10 mm, and cleaved apart along the notch. A cleaved surface was observed and evaluated on the basis of the following criteria:

G (Good): Not less than 60% of the particles were cleaved.
P (Poor): Less than 60% of the particles were cleaved.
(Examples 1-23 and Comparative Examples 1-13)

[Preparation of Polypropylene Resin Particles]

Mixtures were prepared by mixing a polypropylene resin, an antistatic agent, an aliphatic alcohol, and other additives of kinds and amounts shown in Table 1 or 2 and 0.01 part by weight of the organic pigment Perylene Red together. The mixtures were (i) kneaded in an extruder having a diameter of 50 mm (resin temperature of 210°C), (ii) extruded from an end of the extruder into a strand shape, and (iii) granulated by cutting the extruded in the strand shape. Thereby, polypropylene resin particles (1.2 mg per particle) were produced.

[Preparation of Expanded Polypropylene Resin Particles]

In a 10-L pressure-resistant vessel, (i) 300 parts by weight of water, (ii) 100 parts by weight of the polypropylene resin particles produced, (iii) 0.8 part by weight of tertiary calcium phosphate as a dispersion agent, and (iv) 0.03 part by weight of sodium normal paraffin sulfonate as a dispersion auxiliary agent were fed. Further, a foaming agent of a kind and amount shown in Table 1 or 2 was fed in the pressure-resistant vessel. A resulting mixture was, under stirring, retained in the pressure-resistant vessel for 30 minutes at a foaming temperature (temperature inside the vessel) and a foaming pressure (pressure inside the vessel) shown in Table 1 or 2. Next, while the pressure inside the pressure-resistant vessel was maintained at the foaming pressure with use of a gaseous material that was identical in kind to the foaming agent used, a dispersion was released through an orifice into atmospheric pressure, the orifice having a diameter of 3 mm and being provided at a lower portion of the pressure-resistant vessel. This operation produced first-stage expanded particles. The first-stage expanded particles were then dried at 75°C for 24 hours.

[Preparation of Polypropylene Resin In-mold Expanded Molded Product]

Next, the produced first-stage expanded particles were introduced into a mold having a length of 400 mm, a width of 300 mm, and a thickness of 50 mm with no internal pressure applied to the first-stage expanded particles. The mold was heated with use of steam so as to fuse the first-stage expanded particles with one another. This operation produced an in-mold expanded molded product, which was then taken out from the mold. The steam pressure used in this operation had a value shown in Table 1 or 2 (molding condition). The in-mold expanded molded product taken out from the mold was dried and cured for 24 hours in a drier having a temperature of 70°C. Then, physical properties of the in-mold expanded molded product were measured. Results of the measurements are shown in Table 1 or 2. Note that the surface inherent resistance was measured after the in-mold expanded molded product was further kept for 24 hours in a room having a temperature of 23°C and a relative humidity of 50% so as to adjust a condition of the in-mold expanded molded product.

Table 1

| | | | | Examples | | | | | |
|---|---|---|---|---|---|---|---|---|---|
| | | | | 1 | 2 | 3 | 4 | 5 | 6 |
| Polypropylene resins | | Polypropylene resin A | PBW | 100 | 100 | 100 | 100 | 100 | 100 |
| | | Polypropylene resin B | PBW | | | | | | |
| | | Polypropylene resin C | PBW | | | | | | |
| | | Polypropylene resin D | PBW | | | | | | |
| | | Crystal melting heat quantity | J/g | 80 | | | | | |
| Aliphatic diethanolamine fatty acid ester | | Stearyl diethanolamine monostearic acid ester | PBW | 0.15 | 1.5 | 0.09 | 0.6 | 0.6 | 0.15 |
| Aliphatic diethanolamine | | Stearyl diethanolamine | PBW | 0.1 | 1 | 0.06 | 0.4 | | 0.1 |
| | | Lauryl diethanolamine | PBW | | | | | 0.4 | |
| Aliphatic alcohol | | Stearyl alcohol | PBW | | | | | | |
| | | Lauryl alcohol | PBW | | | | | | |
| Other antistatic agents | | N-hydroxyethyl-N-[2-hydroxyalkyl]amine | PBW | | | | | | |
| | | Glycerin stearic acid ester | PBW | | | | | | 0.5 |
| Other additives | | Polyethyleneglycol | PBW | 0.2 | 0.2 | 0.2 | 0.2 | 0.2 | 0.2 |
| | | Talc | PBW | 0.15 | 0.15 | 0.15 | 0.15 | 0.15 | 0.15 |
| | | Melamine | PBW | | | | | | |
| Expanded polypropylene resin particles | First-stage foaming condition | Carbon dioxide amount | PBW | 5.0 | 5.0 | 5.0 | 5.0 | 5.0 | 5.0 |
| | | Isobutane | PBW | - | - | - | - | - | - |
| | | Foaming temperature | °C | 147.5 | 145.8 | 147.5 | 146.2 | 146.3 | 147.2 |
| | | Foaming P (gage P) | MPa | 2.5 | 2.3 | 2.5 | 2.4 | 2.3 | 2.3 |
| | First-stage expanded particles | Expanding ratio | times | 12 | 11 | 11 | 10 | 10 | 10 |
| | | Bulk density | g/L | 54 | 56 | 54 | 59 | 58 | 59 |
| | | DSC Ratio | % | 24 | 24 | 24 | 25 | 24 | 24 |
| | Second-stage foaming condition | EP internal P (absolute P) | MPa | - | - | - | - | - | - |
| | | Steam P (gage P) | MPa | - | - | - | - | - | - |
| | Second-stage expanded particles | Bulk density | g/L | - | - | - | - | - | - |
| Polypropylene resin in-mold expanded molded product | Molding conditions | EP internal P (absolute P) | MPa | - | - | - | - | - | - |
| | | Steam P (gage P) | MPa | 0.28 | 0.28 | 0.28 | 0.28 | 0.28 | 0.28 |
| | In-mold expanded molded product | Density of molded product | g/L | 68 | 67 | 67 | 67 | 67 | 66 |
| | | SIR average value | Ω | $9 \times 10^{10}$ | $3 \times 10^{10}$ | $2 \times 10^{11}$ | $8 \times 10^{10}$ | $6 \times 10^{10}$ | $9 \times 10^{10}$ |
| | | SIR minimum value | Ω | $4 \times 10^{10}$ | $1 \times 10^{10}$ | $8 \times 10^{10}$ | $6 \times 10^{10}$ | $2 \times 10^{10}$ | $4 \times 10^{10}$ |
| | | SIR maximum value | Ω | $2 \times 10^{11}$ | $7 \times 10^{10}$ | $5 \times 10^{11}$ | $1 \times 10^{11}$ | $1 \times 10^{11}$ | $2 \times 10^{11}$ |
| | | SIR variation value | — | 0.60 | 0.48 | 0.71 | 0.35 | 0.62 | 0.61 |
| | | Antistatic property | — | G | E | A | G | G | G |
| | | Unevenness in antistatic property | — | G | E | G | E | G | G |
| | | Contact staining property evaluation | — | G | A | G | G | G | G |
| | | Fogging evaluation | — | G | G | G | G | G | G |
| | | Fusion | — | G | G | G | G | G | G |

*P stands for "pressure".
*EP stands for "expanded particle".
*PBW stands for "parts by weight".
*SIR stands for "surface inherent resistance".

Table 1 (Cont.)

| | | | | Examples 7 | 8 | 9 | 10 | 11 | 12 |
|---|---|---|---|---|---|---|---|---|---|
| Polypropylene resins | Polypropylene resin A | | PBW | 100 | 100 | 100 | 100 | 100 | 100 |
| | Polypropylene resin B | | PBW | | | | | | |
| | Polypropylene resin C | | PBW | | | | | | |
| | Polypropylene resin D | | PBW | | | | | | |
| | Crystal melting heat quantity | | J/g | 80 | | | | | |
| Aliphatic diethanolamine fatty acid ester | Stearyl diethanolamine monostearic acid ester | | PBW | 0.9 | 0.4 | 2 | 0.6 | 0.6 | 0.6 |
| Aliphatic diethanolamine | Stearyl diethanolamine | | PBW | 0.1 | 0.6 | 3 | 0.4 | 0.4 | 0.4 |
| | Lauryl diethanolamine | | PBW | | | | | | |
| Aliphatic alcohol | Stearyl alcohol | | PBW | | | | 0.001 | 0.01 | 1 |
| | Lauryl alcohol | | PBW | | | | | | |
| Other antistatic agents | N-hydroxyethyl-N-[2-hydroxyalkyl]amine | | PBW | | | | | | |
| | Glycerin stearic acid ester | | PBW | | | | | | |
| Other additives | Polyethyleneglycol | | PBW | 0.2 | 0.2 | 0.2 | 0.2 | 0.2 | 0.2 |
| | Talc | | PBW | 0.15 | 0.15 | 0.15 | 0.15 | 0.15 | 0.15 |
| | Melamine | | PBW | | | | | | |
| Expanded polypropylene resin particles | First-stage foaming condition | Carbon dioxide amount | PBW | 5.0 | 5.0 | 5.0 | 5.0 | 5.0 | 5.0 |
| | | Isobutane | PBW | - | - | - | - | - | - |
| | | Foaming temperature | °C | 146.2 | 146.0 | 144.9 | 146.1 | 145.9 | 145.8 |
| | | Foaming P (gage P) | MPa | 2.4 | 2.4 | 2.3 | 2.4 | 2.3 | 2.3 |
| | First-stage expanded particles | Expanding ratio | times | 10 | 11 | 11 | 11 | 10 | 11 |
| | | Bulk density | g/L | 60 | 57 | 56 | 58 | 60 | 56 |
| | | DSC Ratio | % | 27 | 25 | 26 | 25 | 27 | 25 |
| | Second-stage foaming condition | EP internal P (absolute P) | MPa | - | - | - | - | - | - |
| | | Steam P (gage P) | MPa | - | - | - | - | - | - |
| | Second-stage expanded particles | Bulk density | g/L | - | - | - | - | - | - |
| Polypropylene resin in-mold expanded molded product | Molding conditions | EP internal P (absolute P) | MPa | - | - | - | - | - | - |
| | | Steam P (gage P) | MPa | 0.28 | 0.28 | 0.28 | 0.28 | 0.28 | 0.28 |
| | In-mold expanded molded product | Density of molded product | g/L | 67 | 68 | 67 | 67 | 67 | 67 |
| | | SIR average value | Ω | $7 \times 10^{10}$ | $5 \times 10^{10}$ | $4 \times 10^{10}$ | $7 \times 10^{10}$ | $4 \times 10^{10}$ | $4 \times 10^{10}$ |
| | | SIR minimum value | Ω | $5 \times 10^{10}$ | $2 \times 10^{10}$ | $2 \times 10^{10}$ | $2 \times 10^{10}$ | $2 \times 10^{10}$ | $1 \times 10^{10}$ |
| | | SIR maximum value | Ω | $1 \times 10^{11}$ | $1 \times 10^{11}$ | $6 \times 10^{10}$ | $1 \times 10^{11}$ | $7 \times 10^{10}$ | $1 \times 10^{11}$ |
| | | SIR variation value | — | 0.36 | 0.93 | 0.35 | 0.45 | 0.28 | 0.43 |
| | | Antistatic property | — | G | G | E | G | E | E |
| | | Unevenness in antistatic property | — | E | G | E | E | E | E |
| | | Contact staining property evaluation | — | G | G | A | G | G | A |
| | | Fogging evaluation | — | G | G | A | G | G | G |
| | | Fusion | — | G | G | G | G | G | G |

*P stands for "pressure".
*EP stands for "expanded particle".
*PBW stands for "parts by weight".
*SIR stands for "surface inherent resistance".

Table 1 (Cont.)

| | | | | Examples | | | | | |
|---|---|---|---|---|---|---|---|---|---|
| | | | | 13 | 14 | 15 | 16 | 17 | 18 |
| Polypropylene resins | Polypropylene resin A | | PBW | 100 | 100 | 100 | 100 | 100 | 100 |
| | Polypropylene resin B | | PBW | | | | | | |
| | Polypropylene resin C | | PBW | | | | | | |
| | Polypropylene resin D | | PBW | | | | | | |
| | Crystal melting heat quantity | | J/g | 80 | | | | | |
| Aliphatic diethanolamine fatty acid ester | Stearyl diethanolamine monostearic acid ester | | PBW | 0.6 | 0.6 | Electro-stripper TS11B 0.75 part by weight | Electro-stripper TS11B 1.0 part by weight | Electro-stripper TS15B 0.75 part by weight | Electro-stripper TS15B 1.0 part by weight |
| Aliphatic diethanolamine | Stearyl diethanolamine | | PBW | 0.4 | 0.4 | | | | |
| | Lauryl diethanolamine | | PBW | | | | | | |
| Aliphatic alcohol | Stearyl alcohol | | PBW | 3 | | | | | |
| | Lauryl alcohol | | PBW | | 0.01 | | | | |
| Other antistatic agents | N-hydroxyethyl-N-[2-hydroxyalkyl]amine | | PBW | | | | | | |
| | Glycerin stearic acid ester | | PBW | | | | | | |
| Other additives | Polyethyleneglycol | | PBW | 0.2 | 0.2 | 0.2 | 0.2 | 0.2 | 0.2 |
| | Talc | | PBW | 0.15 | 0.15 | 0.15 | 0.15 | 0.15 | 0.15 |
| | Melamine | | PBW | | | | | | |
| Expanded polypropylene resin particles | First-stage foaming condition | Carbon dioxide amount | PBW | 5.0 | 5.0 | 5.0 | 5.0 | 5.0 | 5.0 |
| | | Isobutane | PBW | - | - | - | - | - | - |
| | | Foaming temperature | °C | 145.8 | 146.0 | 146.4 | 146.1 | 146.4 | 146.2 |
| | | Foaming P (gage P) | MPa | 2.3 | 2.3 | 2.3 | 2.3 | 2.3 | 2.3 |
| | First-stage expanded particles | Expanding ratio | times | 11 | 11 | 10 | 11 | 10 | 11 |
| | | Bulk density | g/L | 54 | 58 | 58 | 56 | 58 | 57 |
| | | DSC Ratio | % | 23 | 25 | 25 | 24 | 25 | 25 |
| | Second-stage foaming condition | EP internal P (absolute P) | MPa | - | - | - | - | - | - |
| | | Steam P (gage P) | MPa | - | - | - | - | - | - |
| | Second-stage expanded particles | Bulk density | g/L | - | - | - | - | - | - |
| Polypropylene resin in-mold expanded molded product | Molding conditions | EP internal P (absolute P) | MPa | - | - | - | - | - | - |
| | | Steam P (gage P) | MPa | 0.28 | 0.28 | 0.28 | 0.28 | 0.28 | 0.28 |
| | In-mold expanded molded product | Density of molded product | g/L | 67 | 68 | 67 | 67 | 67 | 66 |
| | | SIR average value | Ω | $3 \times 10^{10}$ | $3 \times 10^{10}$ | $5 \times 10^{10}$ | $4 \times 10^{10}$ | $3 \times 10^{10}$ | $4 \times 10^{10}$ |
| | | SIR minimum value | Ω | $1 \times 10^{10}$ | $1 \times 10^{10}$ | $4 \times 10^{10}$ | $2 \times 10^{10}$ | $2 \times 10^{10}$ | $2 \times 10^{10}$ |
| | | SIR maximum value | Ω | $9 \times 10^{10}$ | $5 \times 10^{10}$ | $7 \times 10^{10}$ | $7 \times 10^{10}$ | $5 \times 10^{10}$ | $8 \times 10^{10}$ |
| | | SIR variation value | — | 0.42 | 0.46 | 0.21 | 0.35 | 0.26 | 0.45 |
| | | Antistatic property | — | E | E | G | E | E | E |
| | | Unevenness in antistatic property | — | E | E | E | E | E | E |
| | | Contact staining property evaluation | — | A | G | G | G | G | G |
| | | Fogging evaluation | — | A | A | G | G | G | G |
| | | Fusion | — | G | G | G | G | G | G |

*P stands for "pressure".
*EP stands for "expanded particle".
*PBW stands for "parts by weight".
*SIR stands for "surface inherent resistance".

Table 1 (Cont.)

| | | | | Examples | | | | |
|---|---|---|---|---|---|---|---|---|
| | | | | 19 | 20 | 21 | 22 | 23 |
| Polypropylene resins | Polypropylene resin A | | PBW | | | | | 90 |
| | Polypropylene resin B | | PBW | 100 | | | | |
| | Polypropylene resin C | | PBW | | 100 | 100 | | |
| | Polypropylene resin D | | PBW | | | | 100 | 10 |
| | Crystal melting heat quantity | | J/g | 84 | 90 | | 100 | 86 |
| Aliphatic diethanolamine fatty acid ester | Stearyl diethanolamine monostearic acid ester | | PBW | Electro-stripper TS15B 1.0 part by weight | Electro-stripper TS15B 1.0 part by weight | Electro-stripper TS15B 0.75part by weight | Electro-stripper TS15B 0.75part by weight | Electro-stripper TS15B 0.75part by weight |
| Aliphatic diethanolamine | Stearyl diethanolamine | | PBW | | | | | |
| | Lauryl diethanolamine | | PBW | | | | | |
| Aliphatic alcohol | Stearyl alcohol | | PBW | | | | | |
| | Lauryl alcohol | | PBW | | | | | |
| Other antistatic agents | N-hydroxyethyl-N-[2-hydroxyalkyl]amine | | PBW | | | | | |
| | Glycerin stearic acid ester | | PBW | | | | | |
| Other additives | Polyethyleneglycol | | PBW | 0.2 | 0.5 | 0.5 | 0.5 | 0.5 |
| | Talc | | PBW | 0.15 | 0.2 | 0.2 | 0.2 | 0.2 |
| | Melamine | | PBW | | | | | |
| Expanded polypropylene resin particles | First-stage foaming condition | Carbon dioxide amount | PBW | 5.0 | 5.5 | 5.5 | 5.0 | 5.0 |
| | | Isobutane | PBW | - | - | - | - | - |
| | | Foaming temperature | °C | 147.0 | 154.6 | 154.1 | 168.0 | 154.0 |
| | | Foaming P (gage P) | MPa | 2.5 | 2.8 | 2.7 | 3.5 | 3.0 |
| | First-stage expanded particles | Expanding ratio | times | 12 | 18 | 17 | 8 | 18 |
| | | Bulk density | g/L | 57 | 30 | 34 | 70 | 30 |
| | | DSC Ratio | % | 23 | 17 | 19 | 60 | 28 |
| | Second-stage foaming condition | EP internal P (absolute P) | MPa | - | - | - | - | - |
| | | Steam P (gage P) | MPa | - | - | - | - | - |
| | Second-stage expanded particles | Bulk density | g/L | - | - | - | - | - |
| Polypropylene resin in-mold expanded molded product | Molding conditions | EP internal P (absolute P) | MPa | - | - | - | - | - |
| | | Steam P (gage P) | MPa | 0.28 | 0.32 | 0.32 | 0.40 | 0.32 |
| | In-mold expanded molded product | Density of molded product | g/L | 67 | 36 | 40 | 86 | 36 |
| | | SIR average value | Ω | $4 \times 10^{10}$ | $1 \times 10^{10}$ | $2 \times 10^{10}$ | $9 \times 10^{10}$ | $2 \times 10^{10}$ |
| | | SIR minimum value | Ω | $2 \times 10^{10}$ | $7 \times 10^{9}$ | $1 \times 10^{10}$ | $4 \times 10^{10}$ | $1 \times 10^{10}$ |
| | | SIR maximum value | Ω | $8 \times 10^{10}$ | $2 \times 10^{10}$ | $3 \times 10^{10}$ | $2 \times 10^{11}$ | $3 \times 10^{10}$ |
| | | SIR variation value | — | 0.47 | 0.35 | 0.20 | 0.61 | 0.22 |
| | | Antistatic property | — | E | E | E | G | E |
| | | Unevenness in antistatic property | — | E | E | E | G | E |
| | | Contact staining property evaluation | — | G | G | G | G | G |
| | | Fogging evaluation | — | G | G | G | G | G |
| | | Fusion | — | G | G | G | G | G |

*P stands for "pressure".
*EP stands for "expanded particle".
*PBW stands for "parts by weight".
*SIR stands for "surface inherent resistance".

Examples 1 through 19 each used a polypropylene resin having a small amount of crystal which polypropylene resin had a crystal melting heat quantity of not less than 50 J/g but less than 85 J/g, whereas Examples 20 through 23 each used a polypropylene resin having a large amount of crystal which polypropylene resin had a crystal melting heat quantity of not less than 85 J/g but not greater than 95 J/g. From the results of Table 1, it can be understood that the in-mold expanded molded product of the present invention has reduced variation in antistatic property. Further, other than Example 22 (which had a high foaming temperature of 168.0°C), Examples 20, 21, and 23 each had an average value of the surface inherent resistance values of not greater than $2 \times 10^{10}\ \Omega$. Examples 20, 21, and 23, in comparison with Examples 1 through 19, indicate a result that in a case where a polypropylene resin having a large amount of crystal is used, the antistatic property is excellent.

Table 2

| | | | | Comparative Examples | | | | | | |
|---|---|---|---|---|---|---|---|---|---|---|
| | | | | 1 | 2 | 3 | 4 | 5 | 6 | 7 |
| Polypropylene resins | | Polypropylene resin A | PBW | 100 | 100 | 100 | 100 | 100 | 100 | 100 |
| | | Polypropylene resin B | PBW | | | | | | | |
| | | Polypropylene resin C | PBW | | | | | | | |
| | | Polypropylene resin D | PBW | | | | | | | |
| | | Crystal melting heat quantity | J/g | 80 | | | | | | |
| Aliphatic diethanolamine fatty acid ester | | Stearyl diethanolamine monostearic acid ester | PBW | | 0,6 | | 0,03 | 1 | | 3,5 |
| Aliphatic diethanolamine | | Stearyl diethanolamine | PBW | | | 0,6 | 0,02 | | 1 | 3,5 |
| | | Lauryl diethanolamine | PBW | | | | | | | |
| Aliphatic alcohol | | Stearyl alcohol | PBW | | | | | | | |
| | | Lauryl alcohol | PBW | | | | | | | |
| Other antistatic agents | | N-hydroxyethyl-N-[2-hydroxyalkyl]amine | PBW | | | | | | | |
| | | Glycerin stearic acid ester | PBW | 1,2 | 0,4 | 0,4 | | | | |
| Other additives | | Polyethyleneglycol | PBW | 0.2 | 0,2 | 0.2 | 0.2 | 0,2 | 0,2 | 0.2 |
| | | Talc | PBW | 0,15 | 0,15 | 0,15 | 0,15 | 0,15 | 0,15 | 0,15 |
| | | Melamine | PBW | | | | | | | |
| Expanded polypropylene resin particles | First-stage foaming condition | Carbon dioxide amount | PBW | 5,0 | 5,0 | 5,0 | 5,0 | 5,0 | 5,0 | Canceled because no stable extrusion was possible during production of polypropylene resin particles |
| | | Isobutane | PBW | - | - | - | - | - | - | |
| | | Foaming temperature | °C | 148,4 | 147,2 | 147,1 | 148,0 | 147,1 | 146,9 | |
| | | Foaming P (gage P) | MPa | 2,4 | 2,4 | 2,4 | 2,4 | 2,3 | 2,3 | |
| | First-stage expanded particles | Expanding ratio | times | 11 | 10 | 11 | 11 | 11 | 12 | |
| | | Bulk density | g/L | 51 | 57 | 56 | 56 | 53 | 51 | |
| | | DSC Ratio | % | 29 | 27 | 26 | 25 | 25 | 25 | |
| | Second-stage foaming condition | EP internal P (absolute P) | MPa | - | - | - | - | - | - | |
| | | Steam P (gage P) | MPa | - | - | - | - | - | - | |
| | Second-stage expanded particles | Bulk density | g/L | - | - | - | - | - | - | |
| Polypropylene resin in-mold expanded molded product | Molding conditions | EP internal P (absolute P) | MPa | - | - | - | - | - | - | |
| | | Steam P (gage P) | MPa | 0,28 | 0,28 | 0,28 | 0,28 | 0,28 | 0,28 | |
| | In-mold expanded molded product | Density of molded product | g/L | 67 | 67 | 68 | 68 | 67 | 67 | |
| | | SIR average value | Ω | $3 \times 10^{12}$ | $4 \times 10^{11}$ | $5 \times 10^{11}$ | $>10^{14}$ | $3 \times 10^{11}$ | $4 \times 10^{10}$ | |
| | | SIR minimum value | Ω | $2 \times 10^{12}$ | $1 \times 10^{11}$ | $1 \times 10^{11}$ | $>10^{14}$ | $9 \times 10^{10}$ | $1 \times 10^{10}$ | |
| | | SIR maximum value | Ω | $7 \times 10^{12}$ | $1 \times 10^{12}$ | $1 \times 10^{12}$ | $>10^{14}$ | $5 \times 10^{11}$ | $2 \times 10^{11}$ | |
| | | SIR variation value | — | 1,52 | 1,23 | 1,35 | - | 1,73 | 2,07 | |
| | | Antistatic property | — | P | A | A | P | A | E | |
| | | Unevenness in antistatic property | — | A | A | A | - | A | A | |
| | | Contact staining property evaluation | — | A | A | A | G | G | A | |
| | | Fogging evaluation | — | G | G | G | G | G | G | |
| | | Fusion | — | G | G | G | G | G | G | |

*P stands for "pressure".
*EP stands for "expanded particle".
*PBW stands for "parts by weight".
*SIR stands for "surface inherent resistance".

Table 2 (Cont.)

| | | | | Comparative Examples | | | | | |
|---|---|---|---|---|---|---|---|---|---|
| | | | | 8 | 9 | 10 | 11 | 12 | 13 |
| Polypropylene resins | Polypropylene resin A | | PBW | | | 100 | 100 | 100 | 100 |
| | Polypropylene resin B | | PBW | | | | | | |
| | Polypropylene resin C | | PBW | 100 | 100 | | | | |
| | Polypropylene resin D | | PBW | | | | | | |
| | Crystal melting heat quantity | | J/g | 90 | | 80 | | | |
| Aliphatic diethanolamine fatty acid ester | Stearyl diethanolamine monostearic acid ester | | PBW | | | Electro-stripper TS11B 0.075 part by weight | Electro-stripper TS11B 7 part by weight | Electro-stripper TS15B 0.075 part by weight | Electro-stripper TS15B 7 part by weight |
| Aliphatic diethanolamine | Stearyl diethanolamine | | PBW | | | | | | |
| | Lauryl diethanolamine | | PBW | | | | | | |
| Aliphatic alcohol | Stearyl alcohol | | PBW | | | | | | |
| | Lauryl alcohol | | PBW | | | | | | |
| Other antistatic agents | N-hydroxyethyl-N-[2-hydroxyalkyl]amine | | PBW | | 0.7 | | | | |
| | Glycerin stearic acid ester | | PBW | 1.2 | | | | | |
| Other additives | Polyethyleneglycol | | PBW | 0.5 | 0.5 | 0.2 | 0.2 | 0.2 | 0.2 |
| | Talc | | PBW | 0.2 | 0.2 | 0.15 | 0.15 | 0.15 | 0.15 |
| | Melamine | | PBW | | | | | | |
| Expanded polypropylene resin particles | First-stage foaming condition | Carbon dioxide amount | PBW | 5.0 | 7.0 | 5.0 | Canceled because no stable extrusion was possible during production of polypropylene resin particles | 5.0 | Canceled because no stable extrusion was possible during production of polypropylene resin particles |
| | | Isobutane | PBW | - | - | - | | - | |
| | | Foaming temperature | °C | 154.4 | 154.1 | 147.2 | | 147.0 | |
| | | Foaming P (gage P) | MPa | 2.8 | 2.8 | 2.5 | | 2.5 | |
| | First-stage expanded particles | Expanding ratio | times | 15 | 10 | 10 | | 10 | |
| | | Bulk density | g/L | 38 | 60 | 59 | | 58 | |
| | | DSC Ratio | % | 20 | 27 | 26 | | 26 | |
| | Second-stage foaming condition | EP internal P (absolute P) | MPa | - | - | - | | - | |
| | | Steam P (gage P) | MPa | - | - | - | | - | |
| | Second-stage expanded particles | Bulk density | g/L | - | - | - | | - | |
| Polypropylene resin in-mold expanded molded product | Molding conditions | EP internal P (absolute P) | MPa | - | - | - | | - | |
| | | Steam P (gage P) | MPa | 0.32 | 0.32 | 0.28 | | 0.28 | |
| | In-mold expanded molded product | Density of molded product | g/L | 45 | 68 | 67 | | 67 | |
| | | SIR average value | Ω | 5 x $10^{13}$ | 1 x $10^{11}$ | >$10^{14}$ | | - | |
| | | SIR minimum value | Ω | 2 x $10^{13}$ | 9 x $10^{10}$ | >$10^{14}$ | | 6×$10^{13}$ | |
| | | SIR maximum value | Ω | 9 x $10^{13}$ | 2 x $10^{11}$ | >$10^{14}$ | | >$10^{14}$ | |
| | | SIR variation value | — | 0.54 | 0.12 | - | | - | |
| | | Antistatic property | — | P | A | P | | P | |
| | | Unevenness in antistatic property | — | G | E | - | | - | |
| | | Contact staining property evaluation | — | G | P | G | | G | |
| | | Fogging evaluation | — | G | P | G | | G | |
| | | Fusion | — | G | P | G | | G | |

*P stands for "pressure".
*EP stands for "expanded particle".
*PBW stands for "parts by weight".
*SIR stands for "surface inherent resistance".

As shown in Table 2, Comparative Examples 1 through 13 each either did not use an aliphatic diethanolamine fatty acid ester and an aliphatic diethanolamine in combination or used an aliphatic diethanolamine fatty acid ester and an aliphatic diethanolamine in combination in respective amounts outside the content range of the present invention. As understood from the result of variation in antistatic property, Comparative Examples 1 through 13 clearly had results inferior to those of Examples 1 through 23. This indicates superiority of the present invention. Particularly, Comparative

Examples 1 and 8 each used glycerin stearic acid ester and polyethyleneglycol in respective amounts equal to each other, whereas Comparative Example 1 used a polypropylene resin having a small amount of crystal, and Comparative Example 8 used a polypropylene resin having a large amount of crystal. Comparative Example 1 had a surface inherent resistance average value of $3 \times 10^{12}$ Ω, whereas Comparative Example 8 had a surface inherent resistance average value of $5 \times 10^{13}$ Ω. This result proves that use of a polypropylene resin having a large amount of crystal results in poor antistatic property. This is in contrast to the results of Examples 20, 21, and 23 in which use of a polypropylene resin having a large amount of crystal resulted in excellent antistatic property. This clearly indicates that the present invention brings about a unique effect.

(Examples 24-40 and Comparative Examples 14-17)

[Preparation of Polypropylene Resin Particles]

Mixtures were prepared by mixing a polypropylene resin, an antistatic agent, an aliphatic alcohol, and other additives of their respective kinds and amounts shown in Table 3 or 4 and 0.01 part by weight of the organic pigment Perylene Red together. The mixtures were (i) kneaded in an extruder having a diameter of 50 mm (resin temperature of 210°C), (ii) extruded from an end of the extruder into a strand shape, and (iii) granulated by cutting the extruded in the strand shape. Thereby, polypropylene resin particles (1.2 mg per particle) were produced.

[Preparation of Expanded Polypropylene Resin Particles]

In a 10-L pressure-resistant vessel, (i) 300 parts by weight of water, (ii) 100 parts by weight of the polypropylene resin particles produced, (iii) 0.8 part by weight of tertiary calcium phosphate as a dispersion agent, and (iv) 0.03 part by weight of sodium normal paraffin sulfonate as a dispersion auxiliary agent were fed. Further, a foaming agent of a kind and amount shown in Table 3 or 4 was fed in the pressure-resistant vessel. A resulting mixture was, under stirring, retained in the pressure-resistant vessel for 30 minutes at a foaming temperature (temperature inside the vessel) and a foaming pressure (pressure inside the vessel) shown in Table 1. Next, while the foaming pressure was maintained with use of a gaseous material that was identical in kind to the foaming agent used inside the pressure-resistant vessel, a dispersion was released through an orifice into atmospheric pressure, the orifice having a diameter of 3 mm and being provided at a lower portion of the pressure-resistant vessel. This operation produced first-stage expanded particles. The first-stage expanded particles were then dried at 75°C for 24 hours.

The first-stage expanded particles were fed in a 1-$m^3$ pressure-resistant vessel, and inside of the pressure-resistant vessel was pressurized with air so as to apply to the first-stage expanded particles an internal pressure higher than atmospheric pressure. The first-stage expanded particles applied higher internal pressure were transferred to a second-stage foaming device and then heated with use of steam to further foam the first-stage expanded particles so as to produce second-stage expanded particles. During this operation, the expanded particle internal pressure and the steam pressure had respective values shown in Table 3 or 4 (second-stage foaming condition).

[Preparation of Polypropylene Resin In-mold Expanded Molded Product]

Next, the second-stage expanded particles produced were fed in a 1-$m^3$ pressure-resistant vessel, and inside of the pressure-resistant vessel was pressurized with air so as to apply to the second-stage expanded particles an internal pressure higher than atmospheric pressure. Then, a mold having a length of 400 mm, a width of 300 mm, and a thickness of 50 mm was filled with the second-stage expanded particles. The mold was heated with use of steam so as to fuse the second-stage expanded particles with one another. This operation produced an in-mold expanded molded product, which was then taken out from the mold. During this operation, the expanded particle internal pressure and the steam pressure had respective values shown in Table 3 or 4 (molding condition). The in-mold expanded molded product taken out from the mold was dried and cured for 24 hours in a drier having a temperature of 70°C. Then, physical properties of the in-mold expanded molded product were measured.

Results of the measurements are shown in Table 3 or 4. Note that the surface inherent resistance was measured after the in-mold expanded molded product was further kept for 24 hours in a room having a temperature of 23°C and a relative humidity of 50% so as to adjust a condition of the in-mold expanded molded product.

Table 3

| | | | | Examples | | | | | |
|---|---|---|---|---|---|---|---|---|---|
| | | | | 24 | 25 | 26 | 27 | 28 | 29 |
| Polypropylene resins | Polypropylene resin A | | PBW | 100 | 100 | 100 | 100 | 100 | 100 |
| | Polypropylene resin B | | PBW | | | | | | |
| | Polypropylene resin C | | PBW | | | | | | |
| | Polypropylene resin D | | PBW | | | | | | |
| | Crystal melting heat quantity | | J/g | 80 | | | | | |
| Aliphatic diethanolamine fatty acid ester | Stearyl diethanolamine monostearic acid ester | | PBW | 0,15 | 1,5 | 0,6 | 0,6 | 0,9 | 0,4 |
| Aliphatic diethanolamine | Stearyl diethanolamine | | PBW | 0,1 | 1 | 0,4 | | 0,1 | 0,6 |
| | Lauryl diethanolamine | | PBW | | | | 0,4 | | |
| Aliphatic alcohol | Stearyl alcohol | | PBW | | | | | | |
| | Lauryl alcohol | | PBW | | | | | | |
| Other antistatic agents | N-hydroxyethyl-N-[2-hydroxyalkyl]amine | | PBW | | | | | | |
| | Glycerin stearic acid ester | | PBW | | | | | | |
| Other additives | Polyethyleneglycol | | PBW | 0,2 | 0,2 | 0,2 | 0,2 | 0,2 | 0,2 |
| | Talc | | PBW | 0,15 | 0,15 | 0,15 | 0,15 | 0,15 | 0,15 |
| | Melamine | | PBW | | | | | | |
| Expanded polypropylene resin particles | First-stage foaming condition | Carbon dioxide amount | PBW | 5,0 | 5,0 | 5,0 | 5,0 | 5,0 | 5,0 |
| | | Isobutane | PBW | - | - | - | - | - | - |
| | | Foaming temperature | °C | 147,5 | 145,8 | 146,2 | 146,3 | 146,2 | 146,0 |
| | | Foaming P (gage P) | MPa | 2,5 | 2,3 | 2,4 | 2,3 | 2,4 | 2,4 |
| | First-stage expanded particles | Expanding ratio | times | 12 | 11 | 10 | 10 | 10 | 11 |
| | | Bulk density | g/L | 54 | 56 | 59 | 58 | 60 | 57 |
| | | DSC Ratio | % | 24 | 24 | 25 | 24 | 27 | 25 |
| | Second-stage foaming condition | EP internal P (absolute P) | MPa | 0,30 | 0,30 | 0,30 | 0,30 | 0,30 | 0,30 |
| | | Steam P (gage P) | MPa | 0,07 | 0,05 | 0,08 | 0,07 | 0,08 | 0,05 |
| | Second-stage expanded particles | Bulk density | g/L | 30 | 27 | 28 | 27 | 29 | 30 |
| Polypropylene resin in-mold expanded molded product | Molding conditions | EP internal P (absolute P) | MPa | 0,20 | 0,20 | 0,20 | 0,20 | 0,20 | 0,20 |
| | | Steam P (gage P) | MPa | 0,28 | 0,28 | 0,28 | 0,28 | 0,28 | 0,28 |
| | In-mold expanded molded product | Density of molded product | g/L | 33 | 32 | 33 | 32 | 33 | 32 |
| | | SIR average value | Ω | $8 \times 10^{10}$ | $3 \times 10^{10}$ | $7 \times 10^{10}$ | $9 \times 10^{10}$ | $8 \times 10^{10}$ | $4 \times 10^{10}$ |
| | | SIR minimum value | Ω | $5 \times 10^{10}$ | $1 \times 10^{10}$ | $3 \times 10^{10}$ | $5 \times 10^{10}$ | $5 \times 10^{10}$ | $2 \times 10^{10}$ |
| | | SIR maximum value | Ω | $1 \times 10^{11}$ | $5 \times 10^{10}$ | $1 \times 10^{11}$ | $1 \times 10^{11}$ | $1 \times 10^{11}$ | $1 \times 10^{11}$ |
| | | SIR variation value | – | 0,53 | 0,39 | 0,47 | 0,39 | 0,12 | 0,32 |
| | | Antistatic property | – | G | E | G | G | G | E |
| | | Unevenness in antistatic property | – | G | E | E | E | E | E |
| | | Contact staining property evaluation | – | G | A | G | G | G | G |
| | | Fogging evaluation | – | G | G | G | G | G | G |
| | | Fusion | – | G | G | G | G | G | G |

*P stands for "pressure".
*EP stands for "expanded particle".
*PBW stands for "parts by weight".
*SIR stands for "surface inherent resistance".

Table 3 (Cont.)

| | | | | Examples | | | | | |
|---|---|---|---|---|---|---|---|---|---|
| | | | | 30 | 31 | 32 | 33 | 34 | 35 |
| Polypropylene resins | | Polypropylene resin A | PBW | 100 | 100 | 100 | 100 | 100 | 100 |
| | | Polypropylene resin B | PBW | | | | | | |
| | | Polypropylene resin C | PBW | | | | | | |
| | | Polypropylene resin D | PBW | | | | | | |
| | | Crystal melting heat quantity | J/g | 80 | | | | | |
| Aliphatic diethanolamine fatty acid ester | | Stearyl diethanolamine monostearic acid ester | PBW | 0,6 | 0,6 | 0,6 | 0,6 | Electro-stripper TS11B 0.75 part by weight | Electro-stripper TS11B 1.0 part by weight |
| Aliphatic diethanolamine | | Stearyl diethanolamine | PBW | 0,4 | 0,4 | 0,4 | 0,4 | | |
| | | Lauryl diethanolamine | PBW | | | | | | |
| Aliphatic alcohol | | Stearyl alcohol | PBW | 0,001 | 0,01 | 1 | | | |
| | | Lauryl alcohol | PBW | | | | 0,01 | | |
| Other antistatic agents | | N-hydroxyethyl-N-[2-hydroxyalkyl]amine | PBW | | | | | | |
| | | Glycerin stearic acid ester | PBW | | | | | | |
| Other additives | | Polyethyleneglycol | PBW | 0,2 | 0,2 | 0,2 | 0,2 | 0,2 | 0,2 |
| | | Talc | PBW | 0,15 | 0,15 | 0,15 | 0,15 | 0,15 | 0,15 |
| | | Melamine | PBW | | | | | | |
| Expanded polypropylene resin particles | First-stage foaming condition | Carbon dioxide amount | PBW | 5,0 | 5,0 | 5,0 | 5,0 | 5,0 | 5,0 |
| | | Isobutane | PBW | - | - | - | - | - | - |
| | | Foaming temperature | ℃ | 146,1 | 145,9 | 145,8 | 146,0 | 146,4 | 146,1 |
| | | Foaming P (gage P) | MPa | 2,4 | 2,3 | 2,3 | 2,3 | 2,3 | 2,3 |
| | First-stage expanded particles | Expanding ratio | times | 11 | 10 | 11 | 11 | 10 | 11 |
| | | Bulk density | g/L | 58 | 60 | 56 | 58 | 58 | 56 |
| | | DSC Ratio | % | 25 | 27 | 25 | 25 | 25 | 24 |
| | Second-stage foaming condition | EP internal P (absolute P) | MPa | 0,30 | 0,30 | 0,30 | 0,30 | 0,30 | 0,30 |
| | | Steam P (gage P) | MPa | 0,07 | 0,08 | 0,04 | 0,06 | 0,06 | 0,05 |
| | Second-stage expanded particles | Bulk density | g/L | 27 | 28 | 28 | 30 | 29 | 31 |
| Polypropylene resin in-mold expanded molded product | Molding conditions | EP internal P (absolute P) | MPa | 0,20 | 0,20 | 0,20 | 0,20 | 0,20 | 0,20 |
| | | Steam P (gage P) | MPa | 0,28 | 0,28 | 0,28 | 0,28 | 0,28 | 0,28 |
| | In-mold expanded molded product | Density of molded product | g/L | 32 | 31 | 33 | 31 | 33 | 32 |
| | | SIR average value | Ω | $7 \times 10^{10}$ | $3 \times 10^{10}$ | $3 \times 10^{10}$ | $3 \times 10^{10}$ | $5 \times 10^{10}$ | $5 \times 10^{10}$ |
| | | SIR minimum value | Ω | $2 \times 10^{10}$ | $1 \times 10^{10}$ | $1 \times 10^{10}$ | $2 \times 10^{10}$ | $2 \times 10^{10}$ | $4 \times 10^{10}$ |
| | | SIR maximum value | Ω | $1 \times 10^{11}$ | $6 \times 10^{10}$ | $4 \times 10^{10}$ | $6 \times 10^{10}$ | $7 \times 10^{10}$ | $7 \times 10^{10}$ |
| | | SIR variation value | — | 0,48 | 0,39 | 0,38 | 0,48 | 0,17 | 0,30 |
| | | Antistatic property | — | G | E | E | E | G | G |
| | | Unevenness in antistatic property | — | E | E | E | E | E | E |
| | | Contact staining property evaluation | — | G | G | A | G | G | G |
| | | Fogging evaluation | — | G | G | G | A | G | G |
| | | Fusion | — | G | G | G | G | G | G |

*P stands for "pressure".
*EP stands for "expanded particle".
*PBW stands for "parts by weight".
*SIR stands for "surface inherent resistance".

Table 3 (Cont.)

| | | | | Examples | | | | |
|---|---|---|---|---|---|---|---|---|
| | | | | 36 | 37 | 38 | 39 | 40 |
| Polypropylene resins | Polypropylene resin A | | PBW | 100 | 100 | | | 90 |
| | Polypropylene resin B | | PBW | | | | | |
| | Polypropylene resin C | | PBW | | | 100 | 100 | |
| | Polypropylene resin D | | PBW | | | | | 10 |
| | Crystal melting heat quantity | | J/g | 80 | | 90 | | 86 |
| Aliphatic diethanolamine fatty acid ester | Stearyl diethanolamine monostearic acid ester | | PBW | Electro-stripper TS15B 0.75 part by weight | Electro-stripper TS15B 1.0 part by weight | Electro-stripper TS15B 1.0 part by weight | Electro-stripper TS15B 0.75 part by weight | Electro-stripper TS15B 0.75 part by weight |
| Aliphatic diethanolamine | Stearyl diethanolamine | | PBW | | | | | |
| | Lauryl diethanolamine | | PBW | | | | | |
| Aliphatic alcohol | Stearyl alcohol | | PBW | | | | | |
| | Lauryl alcohol | | PBW | | | | | |
| Other antistatic agents | N-hydroxyethyl-N-[2-hydroxyalkyl]amine | | PBW | | | | | |
| | Glycerin stearic acid ester | | PBW | | | | | |
| Other additives | Polyethyleneglycol | | PBW | 0,2 | 0,2 | 0,5 | 0,5 | 0,5 |
| | Talc | | PBW | 0,15 | 0,15 | 0,2 | 0,2 | 0,2 |
| | Melamine | | PBW | | | | | |
| Expanded polypropylene resin particles | First-stage foaming condition | Carbon dioxide amount | PBW | 5,0 | 5,0 | 5,5 | 5,5 | 5,0 |
| | | Isobutane | PBW | - | - | - | - | - |
| | | Foaming temperature | ℃ | 146,4 | 146,2 | 154,6 | 154,1 | 154,0 |
| | | Foaming P (gage P) | MPa | 2,3 | 2,3 | 2,8 | 2,7 | 3,0 |
| | First-stage expanded particles | Expanding ratio | times | 10 | 11 | 18 | 17 | 18 |
| | | Bulk density | g/L | 58 | 57 | 30 | 34 | 30 |
| | | DSC Ratio | % | 25 | 25 | 17 | 19 | 28 |
| | Second-stage foaming condition | EP internal P (absolute P) | MPa | 0,30 | 0,30 | 0,25 | 0,25 | 0,25 |
| | | Steam P (gage P) | MPa | 0,05 | 0,05 | 0,04 | 0,04 | 0,04 |
| | Second-stage expanded particles | Bulk density | g/L | 33 | 31 | 23,00 | 23,00 | 23,00 |
| Polypropylene resin in-mold expanded molded product | Molding conditions | EP internal P (absolute P) | MPa | 0,20 | 0,20 | - | - | - |
| | | Steam P (gage P) | MPa | 0,28 | 0,28 | 0,32 | 0,32 | 0,32 |
| | In-mold expanded molded product | Density of molded product | g/L | 32 | 32 | 25 | 24 | 25 |
| | | SIR average value | Ω | $3 \times 10^{10}$ | $2 \times 10^{10}$ | $4 \times 10^{10}$ | $6 \times 10^{10}$ | $7 \times 10^{10}$ |
| | | SIR minimum value | Ω | $2 \times 10^{10}$ | $1 \times 10^{10}$ | $1 \times 10^{10}$ | $3 \times 10^{10}$ | $4 \times 10^{10}$ |
| | | SIR maximum value | Ω | $5 \times 10^{10}$ | $7 \times 10^{10}$ | $5 \times 10^{10}$ | $7 \times 10^{10}$ | $8 \times 10^{10}$ |
| | | SIR variation value | — | 0,31 | 0,46 | 0.45 | 0,33 | 0,25 |
| | | Antistatic property | — | E | E | E | G | G |
| | | Unevenness in antistatic property | — | E | E | E | E | E |
| | | Contact staining property evaluation | — | G | G | G | G | G |
| | | Fogging evaluation | — | G | G | G | G | G |
| | | Fusion | — | G | G | G | G | G |

*P stands for "pressure".
*EP stands for "expanded particle".
*PBW stands for "parts by weight".
*SIR stands for "surface inherent resistance".

The results of Examples 24 through 40 clearly indicate that the in-mold expanded molded product of the present invention has reduced variation in surface inherent resistance. Further, Examples 38 through 40, each of which used a polypropylene resin having a large amount of crystal, had surface inherent resistance average values equivalent to those of Examples 24 through 37. This is a result contrary to a common tendency in which a polypropylene resin having a large amount of crystal has a surface inherent resistance average value inferior to that of a polypropylene resin having a small amount of crystal.

Table 4

| | | | | Comparative Examples | | | |
|---|---|---|---|---|---|---|---|
| | | | | 14 | 15 | 16 | 17 |
| Polypropylene resins | Polypropylene resin A | | PBW | 100 | 100 | 100 | 100 |
| | Polypropylene resin B | | PBW | | | | |
| | Polypropylene resin C | | PBW | | | | |
| | Polypropylene resin D | | PBW | | | | |
| | Crystal melting heat quantity | | J/g | 80 | | | |
| Aliphatic diethanolamine fatty acid ester | Stearyl diethanolamine monostearic acid ester | | PBW | | 0,03 | Electro-stripper TS11B 0.075 part by weight | Electro-stripper TS15B 0.075 part by weight |
| Aliphatic diethanolamine | Stearyl diethanolamine | | PBW | | 0,02 | | |
| | Lauryl diethanolamine | | PBW | | | | |
| Aliphatic alcohol | Stearyl alcohol | | PBW | | | | |
| | Lauryl alcohol | | PBW | | | | |
| Other Antistatic agents | N-hydroxyethyl-N-[2-hydroxyalkyl]amine | | PBW | | | | |
| | Glycerin stearic acid ester | | PBW | 1.2 | | | |
| Other additives | Polyethyleneglycol | | PBW | 0,2 | 0.2 | 0.2 | 0,2 |
| | Talc | | PBW | 0,15 | 0,15 | 0,15 | 0,15 |
| | Melamine | | PBW | | | | |
| Expanded polypropylene resin particles | First-stage foaming condition | Carbon dioxide amount | PBW | 5,0 | 5,0 | 5,0 | 5,0 |
| | | Isobutane | PBW | - | - | - | - |
| | | Foaming temperature | °c | 148.4 | 148,0 | 147,2 | 147,0 |
| | | Foaming P (gage P) | MPa | 2,4 | 2.4 | 2.5 | 2,5 |
| | First-stage expanded particles | Expanding ratio | times | 11 | 11 | 10 | 10 |
| | | Bulk density | g/L | 51 | 56 | 59 | 58 |
| | | DSC Ratio | % | 29 | 25 | 26 | 26 |
| | Second-stage foaming condition | EP internal P (absolute P) | MPa | 0,30 | 0,30 | 0,30 | 0,30 |
| | | Steam P (gage P) | MPa | 0,08 | 0,07 | 0,07 | 0,07 |

(continued)

| | | | | Comparative Examples | | | |
|---|---|---|---|---|---|---|---|
| | | | | 14 | 15 | 16 | 17 |
| | Second-stage expanded particles | Bulk density | g/L | 29 | 31 | 31 | 30 |
| Polypropylene resin in-mold expanded molded product | Molding conditions | EP internal P (absolute P) | MPa | 0,20 | 0,20 | 0,20 | 0,20 |
| | | Steam P (gage P) | MPa | 0,28 | 0,28 | 0.28 | 0.28 |
| | In-mold expanded molded product | Density of molded product | g/L | 32 | 32 | 32 | 32 |
| | | SIR average value | Ω | $4 \times 10^{12}$ | $>10^{14}$ | $>10^{14}$ | $>10^{14}$ |
| | | SIR minimum value | Ω | $1 \times 10^{12}$ | $>10^{14}$ | $>10^{14}$ | $>10^{14}$ |
| | | SIR maximum value | Ω | $1 \times 10^{13}$ | $>10^{14}$ | $>10^{14}$ | $>10^{14}$ |
| | | SIR variation value | - | 1,2 | - | - | - |
| | | Antistatic property | - | P | P | P | P |
| | | Unevenness in antistatic property | - | A | - | - | - |
| | | Contact staining property evaluation | - | A | G | G | G |
| | | Fogging evaluation | - | G | G | G | G |
| | | Fusion | - | G | G | G | G |

*P stands for "pressure".
*EP stands for "expanded particle".
*PBW stands for "parts by weight".
*SIR stands for "surface inherent resistance".

(Example 41 and Comparative Example 18)

[Preparation of Polypropylene Resin Particles]

Mixtures were prepared by mixing a polypropylene resin, an antistatic agent, an aliphatic alcohol, and other additives of their respective kinds and amounts shown in Table 5 and 0.01 part by weight of the organic pigment Perylene Red together. The mixtures were (i) kneaded in an extruder having a diameter of 50 mm (resin temperature of 210°C), (ii) extruded from an end of the extruder into a strand shape, and (iii) granulated by cutting the extruded in the strand shape. Thereby, polypropylene resin particles (1.2 mg per particle) were produced.

[Preparation of Expanded Polypropylene Resin Particles]

In a 10-L pressure-resistant vessel, (i) 300 parts by weight of water, (ii) 100 parts by weight of the polypropylene resin particles produced, (iii) 0.5 part by weight of tertiary calcium phosphate as a dispersion agent, and (iv) 0.02 part by weight of sodium normal paraffin sulfonate as a dispersion auxiliary agent were fed. With a resulting mixture under stirred, a temperature of the pressure-resistant vessel was set to a foaming temperature (temperature inside the vessel) shown in Table 5, and inside of the pressure-resistant vessel was pressurized with air so as to have a foaming pressure (pressure inside the vessel) shown in Table 5. The mixture was then retained in that state for 30 minutes for impregnation with water. Next, while the pressure inside the pressure-resistant vessel was maintained at the foaming pressure with use of air, a dispersion was released through an orifice, the orifice having a diameter of 3 mm and being provided at a lower portion of the pressure-resistant vessel, so as to be subjected to a saturated steam pressure of 0.05 MPa (gage pressure). This operation produced first-stage expanded particles. The first-stage expanded particles were then dried at 75°C for 24 hours.

Next, the first-stage expanded particles produced were fed in a 1-$m^3$ pressure-resistant vessel, and inside of the pressure-resistant vessel was pressurized with air so as to apply to the first-stage expanded particles an internal pressure higher than atmospheric pressure. The first-stage expanded particles applied higher internal pressure were transferred to a second-stage foaming device and then heated with use of steam to further foam the first-stage expanded particles so as to produce second-stage expanded particles. During this operation, the expanded particle internal pressure and the steam pressure had respective values shown in Table 5 (second-stage foaming condition).

[Preparation of Polypropylene Resin In-mold Expanded Molded Product]

Next, the second-stage expanded particles produced were fed in a 1-$m^3$ pressure-resistant vessel, and inside of the pressure-resistant vessel was pressurized with air so as to apply to the second-stage expanded particles an internal pressure higher than atmospheric pressure. Then, a mold having a length of 400 mm, a width of 300 mm, and a thickness of 50 mm was filled with the second-stage expanded particles. The mold was heated with use of steam so as to fuse the second-stage expanded particles with one another. This operation produced an in-mold expanded molded product, which was then taken out from the mold. During this operation, the expanded particle internal pressure and the steam pressure had respective values shown in Table 5 (molding condition). The in-mold expanded molded product taken out from the mold was dried and cured for 24 hours in a drier having a temperature of 70°C. Then, physical properties of the in-mold expanded molded product were measured. Results of the measurements are shown in Table 5. Note that the surface inherent resistance was measured after the in-mold expanded molded product was further kept for 24 hours in a room having a temperature of 23°C and a relative humidity of 50% so as to adjust a condition of the in-mold expanded molded product.

(Example 42)

[Preparation of Polypropylene Resin Particles]

A mixture was prepared by mixing a polypropylene resin, an antistatic agent, an aliphatic alcohol, and other additives of their respective kinds and amounts shown in Table 5 and 0.01 part by weight of the organic pigment Perylene Red together. The mixture was (i) kneaded in an extruder having a diameter of 50 mm (resin temperature of 210°C), (ii) extruded from an end of the extruder into a strand shape, and (iii) granulated by cutting the extruded in the strand shape. Thereby, polypropylene resin particles (1.2 mg per particle) were produced.

[Preparation of Expanded Polypropylene Resin Particles]

In a 10-L pressure-resistant vessel, (i) 300 parts by weight of water, (ii) 100 parts by weight of the particles produced, (iii) 1.2 part by weight of tertiary calcium phosphate as a dispersion agent, and (iv) 0.05 part by weight of sodium normal paraffin sulfonate as a dispersion auxiliary agent were fed. Further, 15 parts by weight of isobutane was fed in the pressure-resistant vessel. A resulting mixture was, under stirred, retained in the pressure-resistant vessel for 30 minutes at a foaming temperature (temperature inside the vessel) and a foaming pressure (pressure inside the vessel) shown in Table 5. Next, while the pressure inside the pressure-resistant vessel was maintained at the foaming pressure with use of nitrogen, an aqueous dispersion was released through an orifice into atmospheric pressure, the orifice having a diameter of 5 mm and being provided at a lower portion of the pressure-resistant vessel. This operation produced first-stage expanded particles.

[Preparation of Polypropylene Resin In-mold Expanded Molded Product]

Next, the first-stage expanded particles produced were fed in a 1-m$^3$ pressure-resistant vessel, and inside of the pressure-resistant vessel was pressurized with air so as to apply to the first-stage expanded particles an internal pressure higher than atmospheric pressure. Then, a mold having a length of 400 mm, a width of 300 mm, and a thickness of 50 mm was filled with the first-stage expanded particles. The mold was heated with use of steam so as to fuse the first-stage expanded particles with one another. This operation produced an in-mold expanded molded product, which was then taken out from the mold. During this operation, the expanded particle internal pressure and the steam pressure had respective values shown in Table 5 (molding condition). The in-mold expanded molded product taken out from the mold was dried and cured for 24 hours in a drier having a temperature of 70°C. Then, physical properties of the in-mold expanded molded product were measured. Results of the measurements are shown in Table 5. Note that the surface inherent resistance was measured after the in-mold expanded molded product was further kept for 24 hours in a room having a temperature of 23°C and a relative humidity of 50% so as to adjust a condition of the in-mold expanded molded product.

Table 5

<table>
<tr><td colspan="4" rowspan="2"></td><td colspan="2">Examples</td><td>Comparative Examples</td></tr>
<tr><td>41</td><td>42</td><td>18</td></tr>
<tr><td rowspan="5">Polypropylene resins</td><td colspan="2">Polypropylene resin A</td><td>PBW</td><td>100</td><td>100</td><td>100</td></tr>
<tr><td colspan="2">Polypropylene resin B</td><td>PBW</td><td></td><td></td><td></td></tr>
<tr><td colspan="2">Polypropylene resin C</td><td>PBW</td><td></td><td></td><td></td></tr>
<tr><td colspan="2">Polypropylene resin D</td><td>PBW</td><td></td><td></td><td></td></tr>
<tr><td colspan="2">Crystal melting heat quantity</td><td>J/g</td><td></td><td></td><td>80</td></tr>
<tr><td>Aliphatic diethanolamine fatty acid ester</td><td colspan="2">Stearyl diethanolamine monostearic acid ester</td><td>PBW</td><td rowspan="5">Etectro-stripperTS15B 1.0 part by weight</td><td rowspan="5">Electro-stripperTS15B 1.0 part by weight</td><td></td></tr>
<tr><td rowspan="2">Aliphatic diethanolamine</td><td colspan="2">Stearyl diethanolamine</td><td>PBW</td><td></td></tr>
<tr><td colspan="2">Lauryl diethanolamine</td><td>PBW</td><td></td></tr>
<tr><td rowspan="2">Aliphatic alcohol</td><td colspan="2">Stearyl alcohol</td><td>PBW</td><td></td></tr>
<tr><td colspan="2">Lauryl alcohol</td><td>PBW</td><td></td></tr>
<tr><td rowspan="2">Other antistatic agents</td><td colspan="2">N-hydroxyethyl-N-[2-hydroxyalkyl]amine</td><td>PBW</td><td></td><td></td><td>1</td></tr>
<tr><td colspan="2">Glycerin stearic acid ester</td><td>PBW</td><td></td><td></td><td></td></tr>
<tr><td rowspan="3">Other additives</td><td colspan="2">Polyethyleneglycol</td><td>PBW</td><td></td><td></td><td></td></tr>
<tr><td colspan="2">Talc</td><td>PBW</td><td>0,15</td><td>0,1</td><td>0,15</td></tr>
<tr><td colspan="2">Melamine</td><td>PBW</td><td>0,15</td><td></td><td>0,15</td></tr>
<tr><td rowspan="4"></td><td rowspan="4">First-stage foaming condition</td><td>Carbon dioxide amount</td><td>PBW</td><td>-</td><td>-</td><td>-</td></tr>
<tr><td>Isobutane</td><td>PBW</td><td>-</td><td>15,0</td><td>-</td></tr>
<tr><td>Foaming temperature</td><td>°C</td><td>150,0</td><td>136,0</td><td>150,0</td></tr>
<tr><td>Foaming P (gage P)</td><td>MPa</td><td>2,7</td><td>2.0</td><td>2.7</td></tr>
</table>

(continued)

| | | | | Examples | | Comparative Examples |
|---|---|---|---|---|---|---|
| | | | | 41 | 42 | 18 |
| Expanded polypropylene resin particles | First-stage expanded particles | Expanding ratio | times | 12 | 30 | 11 |
| | | Bulk density | g/L | 55 | 25 | 56 |
| | | DSC Ratio | % | 29 | 25 | 30 |
| | Second-stage foaming condition | EP internal P (absolute P) | MPa | 0,30 | - | 0,30 |
| | | Steam P (gage P) | MPa | 0,07 | - | 0,07 |
| | Second-stage expanded particles | Bulk density | g/L | 31 | - | 32 |
| Polypropylene resin in-mold expanded molded product | Molding conditions | EP internal P (absolute P) | MPa | 0,20 | 0.20 | 0,20 |
| | | Steam P (gage P) | MPa | 0,28 | 0,28 | 0,28 |
| | In-mold expanded molded product | Density of molded product | g/L | 33 | 23 | 32 |
| | | SIR average value | Ω | $5 \times 10^{10}$ | $5 \times 10^{10}$ | $9 \times 10^{11}$ |
| | | SIR minimum value | Ω | $4 \times 10^{10}$ | $4 \times 10^{10}$ | $1 \times 10^{11}$ |
| | | SIR maximum value | Ω | $7 \times 10^{10}$ | $7 \times 10^{10}$ | $5 \times 10^{13}$ |
| | | SIR variation value | - | 0,30 | 0,30 | 13 |
| | | Antistatic property | - | G | G | A |
| | | Unevenness in antistatic property | - | E | E | P |
| | | Contact staining property evaluation | - | G | G | P |
| | | Fogging evaluation | - | G | G | G |
| | | Fusion | - | G | G | G |

*P stands for "pressure".
*EP stands for "expanded particle".
*PBW stands for "parts by weight".
*SIR stands for "surface inherent resistance".

## Claims

1. Expanded polypropylene resin particles comprising a polypropylene resin composition containing an aliphatic diethanolamine fatty acid ester and an aliphatic diethanolamine in a total content of not less than 0.1 part by weight but not greater than 5 parts by weight with respect to 100 parts by weight of polypropylene resin.

2. The expanded polypropylene resin particles according to claim 1, wherein:

    the aliphatic diethanolamine fatty acid ester is a compound represented by General Formula (1) below; and the aliphatic diethanolamine is a compound represented by General Formula (2) below,

    [Chem. 1]

    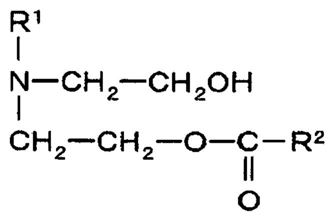

    ... General Formula (1)

    where $R^1$ is a C12 to C24 alkyl group, $R^2$ is a C11 to C23 alkyl group, and $R^1$ and $R^2$ are optionally identical to or different from each other,

    [Chem. 2]

    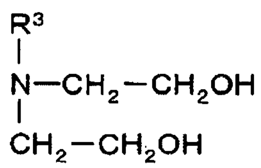

    ... General Formula (2)

    where $R^3$ is a C12 to C24 alkyl group.

3. The expanded polypropylene resin particles according to claim 2, wherein:

    the aliphatic diethanolamine fatty acid ester is stearyl diethanolamine monostearic acid ester; and the aliphatic diethanolamine is stearyl diethanolamine.

4. The expanded polypropylene resin particles according to any one of claims 1 to 3, wherein the polypropylene resin has a crystal melting heat quantity of not less than 85 J/g but not greater than 95 J/g.

5. The expanded polypropylene resin particles according to any one of claims 1 to 4, wherein the polypropylene resin composition further contains an aliphatic alcohol.

6. The expanded polypropylene resin particles according to claim 5, wherein the aliphatic alcohol is a compound represented by General Formula (3) below,
    [Chem. 3]

    $R^4$-OH General Formula (3)

where $R^4$ is a C12 to C24 alkyl group.

**7.** An in-mold expanded molded product comprising expanded polypropylene resin particles according to any one of claims 1 to 6.

**8.** A method for producing expanded polypropylene resin particles, the method comprising:

(a) a step including (i) melt-kneading, in an extruder, a polypropylene resin composition containing an aliphatic diethanolamine fatty acid ester and an aliphatic diethanolamine in a total content of not less than 0.1 part by weight but not greater than 5 parts by weight with respect to 100 parts by weight of polypropylene resin, (ii) extruding the polypropylene resin composition from an end of the extruder into a strand shape, and (iii) cutting the strand shape of the polypropylene resin composition so as to produce polypropylene resin particles; and
(b) a step including (i) introducing, in a pressure-resistant vessel, the polypropylene resin particles, water, an inorganic dispersion agent, and a foaming agent, (ii) dispersing the polypropylene resin particles, the inorganic dispersion agent, the foaming agent, and the water under stirring and while heating the content in the pressure-resistant vessel to a temperature not lower than a softening point of the polypropylene resin particles, so as to obtain a dispersion and (iii) releasing the dispersion in the pressure-resistant vessel to an area having a pressure lower than an internal pressure of the pressure-resistant vessel so as to produce expanded polypropylene resin particles.

**9.** The method according to claim 8,
wherein
the polypropylene resin used in the step (a) has a crystal melting heat quantity of not less than 85 J/g but not greater than 95 J/g.

**10.** The method according to claim 8 or 9,
wherein
the polypropylene resin composition of the step (a) further contains an aliphatic alcohol.

**11.** A method for producing an in-mold expanded molded product,
the method comprising the steps of:

(i) introducing, into a mold, expanded polypropylene resin particles comprising a polypropylene resin composition containing an aliphatic diethanolamine fatty acid ester and an aliphatic diethanolamine in a total content of not less than 0.1 part by weight but not greater than 5 parts by weight with respect to 100 parts by weight of polypropylene resin; and
(ii) heating the expanded polypropylene resin particles in the mold so as to produce an in-mold expanded molded product.

**12.** The method according to claim 11,
wherein
the polypropylene resin has a crystal melting heat quantity of not less than 85 J/g but not greater than 95 J/g.

**13.** The method according to claim 11 or 12,
wherein
the polypropylene resin composition further contains an aliphatic alcohol.

## Patentansprüche

**1.** Expandierte Polypropylenharzteilchen, die eine Polypropylenharzzusammensetzung umfassen, die einen aliphatischen Diethanolaminfettsäureester und ein aliphatisches Diethanolamin in einem Gesamtgehalt von nicht weniger als 0,1 Gewichtsteilen aber nicht mehr als 5 Gewichtsteilen mit Bezug auf 100 Gewichtsteile Polypropylenharz enthält.

**2.** Expandierte Polypropylenharzteilchen nach Anspruch 1,
wobei:

der aliphatische Diethanolaminfettsäureester eine unten durch die allgemeine Formel (1) dargestellte Verbindung ist; und
das aliphatische Diethanolamin eine unten durch die allgemeine Formel (2) dargestellte Verbindung ist,

[Chem. 1]

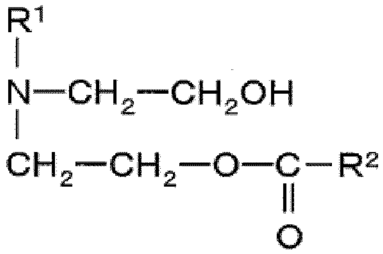

... Allgemeine Formel (1)

wobei $R^1$ eine C12 bis C24 Alkylgruppe ist, $R^2$ eine C11 bis C23 Alkylgruppe ist und $R^1$ und $R^2$ optional identisch zueinander oder unterschiedlich voneinander sind,

[Chem. 2]

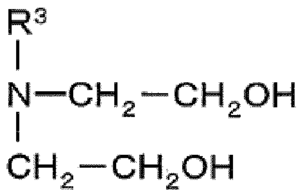

... Allgemeine Formel (2)

wobei $R^3$ eine C12 bis C24 Alkylgruppe ist.

**3.** Expandierte Polypropylenharzteilchen nach Anspruch 2,
wobei:

der aliphatische Diethanolaminfettsäureester Stearyldiethanolaminmonostearinsäureester ist; und
das aliphatische Diethanolamin Stearyldiethanolamin ist.

**4.** Expandierte Polypropylenharzteilchen nach einem der Ansprüche 1 bis 3,
wobei
das Polypropylenharz eine kristalline Schmelzwärmemenge von nicht weniger als 85 J/g aber nicht mehr als 95 J/g aufweist.

**5.** Expandierte Polypropylenharzteilchen nach einem der Ansprüche 1 bis 4,
wobei
die Polypropylenharzzusammensetzung ferner einen aliphatischen Alkohol enthält.

**6.** Expandierte Polypropylenharzteilchen nach Anspruch 5,
wobei
der aliphatische Alkohol eine unten durch die allgemeine Formel (3) dargestellte Verbindung ist,
[Chem. 3]

$R^4$-OH ... Allgemeine Formel (3)

wobei $R^4$ eine C12 bis C24 Alkylgruppe ist.

**7.** In-mold expandiertes Formprodukt, das die expandierten Polypropylenharzteilchen nach einem der Ansprüche 1 bis 6 umfasst.

**8.** Verfahren zum Herstellen von expandierten Polypropylenharzteilchen, wobei das Verfahren umfasst:

(a) einen Schritt, beinhaltend (i) das Schmelzkneten einer Polypropylenharzzusammensetzung, die einen aliphatischen Diethanolaminfettsäureester und ein aliphatisches Diethanolamin in einem Gesamtgehalt von nicht weniger als 0,1 Gewichtsteilen aber nicht mehr als 5 Gewichtsteile mit Bezug auf 100 Gewichtsteile Polypropylenharz enthält, in einem Extruder, (ii) das Extrudieren der Polypropylenharzzusammensetzung aus einem Ende des Extruders in einer Strangform, (iii) das Schneiden der Strangform der Polypropylenharzzusammensetzung, um Polypropylenharzteilchen herzustellen; und
(b) einen Schritt, beinhaltend (i) das Einführen der Polypropylenharzteilchen, von Wasser, einem anorganischen Dispersionsmittel und einem Schäumungsmittel in einen druckbeständigen Behälter, (ii) das Dispergieren der Polypropylenharzteilchen, des anorganischen Dispersionsmittels, des Schäumungsmittels und des Wassers unter Rühren und während der Inhalts des druckbeständigen Gefäßes auf eine Temperatur erwärmt wird, die nicht niedriger als ein Erweichungspunkt der Polypropylenharzteilchen ist, um eine Dispersion zu erhalten, und (iii) das Freisetzen der Dispersion in dem druckbeständigen Behälter zu einem Bereich mit einem Druck, der niedriger als ein interner Druck des druckbeständigen Gefäßes ist, um expandierte Polypropylenharzteilchen herzustellen.

**9.** Verfahren nach Anspruch 8,
wobei
das in dem Schritt (a) verwendete Polypropylenharz eine kristalline Schmelzwärmemenge von nicht weniger als 85 J/g aber nicht mehr als 95 J/g aufweist.

**10.** Verfahren nach Anspruch 8 oder 9,
wobei
die Polypropylenharzzusammensetzung des Schritts (a) ferner einen aliphatischen Alkohol enthält.

**11.** Verfahren zum Herstellen eines in-mold expandierten Formprodukts,
wobei das Verfahren die Schritte umfasst:

(i) das Einführen der expandierten Polypropylenharzteilchen, die eine Polypropylenharzzusammensetzung umfassen, die einen aliphatischen Diethanolaminfettsäureester und ein aliphatisches Diethanolamin in einem Gesamtgehalt von nicht weniger als 0,1 Gewichtsteilen aber nicht mehr als 5 Gewichtsteile mit Bezug auf 100 Gewichtsteile Polypropylenharz enthält, in ein Formteil; und
(ii) das Erwärmen der expandierten Polypropylenharzteilchen in dem Formteil , um ein in-mold expandiertes Formprodukt herzustellen.

**12.** Verfahren nach Anspruch 11,
wobei
das Polypropylenharz eine kristalline Schmelzwärmemenge von nicht weniger als 85 J/g aber nicht mehr als 95 J/g aufweist.

**13.** Verfahren nach Anspruch 11 oder 12,
wobei
die Polypropylenharzzusammensetzung ferner einen aliphatischen Alkohol enthält.

## Revendications

**1.** Particules de résine de polypropylène expansé comprenant une composition de résine de polypropylène contenant un ester d'acide gras de diéthanolamine aliphatique et une diéthanolamine aliphatique dans une teneur totale n'étant pas inférieure à 0,1 partie en poids mais pas supérieure à 5 parties en poids par rapport à 100 parties en poids de résine de polypropylène.

**2.** Particules de résine de polypropylène expansé selon la revendication 1,
dans lesquelles :

l'ester d'acide gras de diéthanolamine aliphatique est un composé représenté par la formule générale (1) ci-après ; et

la diéthanolamine aliphatique est un composé représenté par la formule générale (2) ci-après,

[Composé chim. 1]

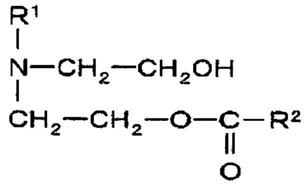

... Formule générale (1)

où $R^1$ est un groupe alkyle en C12 à C24, $R^2$ est un groupe alkyle en C11 à C23, et $R^1$ et $R^2$ sont éventuellement identiques ou différents l'un de l'autre,

[Composé chim. 2]

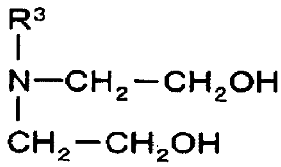

... Formule générale (2)

où $R^3$ est un groupe alkyle en C12 à C24.

**3.** Particules de résine de polypropylène expansé selon la revendication 2, dans lesquelles :

l'ester d'acide gras de diéthanolamine aliphatique est de l'ester d'acide monostéarique de diéthanolamine de stéaryle ; et
la diéthanolamine aliphatique est de la diéthanolamine de stéaryle.

**4.** Particules de résine de polypropylène expansé selon l'une quelconque des revendications 1 à 3, dans lesquelles
la résine de polypropylène présente une quantité de chaleur de fusion cristalline n'étant pas inférieure à 85 J/g, mais pas supérieure à 95 J/g.

**5.** Particules de résine de polypropylène expansé selon l'une quelconque des revendications 1 à 4, dans lesquelles
la composition de résine de polypropylène contient en outre un alcool aliphatique.

**6.** Particules de résine de polypropylène expansé selon la revendication 5, dans lesquelles
l'alcool aliphatique est un composé représenté par la formule générale (3) ci-après,
[Composé chim. 3]

$R^4$-OH ... Formule générale (3)

où $R^4$ est un groupe alkyle en C 12 à C24.

**7.** Produit moulé expansé dans le moule comprenant des particules de résine de polypropylène expansé selon l'une quelconque des revendications 1 à 6.

**8.** Procédé de production de particules de résine de polypropylène expansé, le procédé comprenant :

(a) une étape incluant (i) le malaxage à l'état fondu, dans une extrudeuse, d'une composition de résine de polypropylène contenant un ester d'acide gras de diéthanolamine aliphatique et une diéthanolamine aliphatique dans une teneur totale n'étant pas inférieure à 0,1 partie en poids mais pas supérieure à 5 parties en poids par rapport à 100 parties en poids de résine de polypropylène, (ii) l'extrusion de la composition de résine de polypropylène à partir d'une extrémité de l'extrudeuse en une forme de brin, et (iii) la découpe de la forme de brin de la composition de résine de polypropylène de sorte à produire des particules de résine de polypropylène ; et
(b) une étape incluant (i) l'introduction, dans un récipient résistant à la pression, des particules de résine de polypropylène, d'eau, d'un agent de dispersion inorganique et d'un agent moussant, (ii) la dispersion des particules de résine de polypropylène, de l'agent de dispersion inorganique, de l'agent moussant et de l'eau sous agitation et tout en chauffant le contenu dans le récipient résistant à la pression à une température n'étant pas inférieure à un point de ramollissement des particules de résine de polypropylène, de sorte à obtenir une dispersion et (iii) la libération de la dispersion dans le récipient résistant à la pression vers une zone ayant une pression inférieure à une pression interne du récipient résistant à la pression de sorte à produire des particules de résine de polypropylène expansé.

**9.** Procédé selon la revendication 8,
dans lequel
la résine de polypropylène utilisée dans l'étape (a) présente une quantité de chaleur de fusion cristalline n'étant pas inférieure à 85 J/g, mais pas supérieure à 95 J/g.

**10.** Procédé selon la revendication 8 ou 9,
dans lequel
la composition de résine de polypropylène de l'étape (a) contient en outre un alcool aliphatique.

**11.** Procédé de production d'un produit moulé expansé dans le moule,
le procédé comprenant les étapes suivantes :

(i) l'introduction, dans un moule, de particules de résine de polypropylène expansé comprenant une composition de résine de polypropylène contenant un ester d'acide gras de diéthanolamine aliphatique et une diéthanolamine aliphatique dans une teneur totale n'étant pas inférieure à 0,1 partie en poids, mais pas supérieure à 5 parties en poids par rapport à 100 parties en poids de résine de polypropylène ; et
(ii) le chauffage des particules de résine de polypropylène expansé dans le moule de sorte à produire un produit moulé expansé dans le moule.

**12.** Procédé selon la revendication 11,
dans lequel
la résine de polypropylène présente une quantité de chaleur de fusion cristalline n'étant pas inférieure à 85 J/g mais pas supérieure à 95 J/g.

**13.** Procédé selon la revendication 11 ou 12,
dans lequel
la composition de résine de polypropylène contient en outre un alcool aliphatique.

F I G. 1

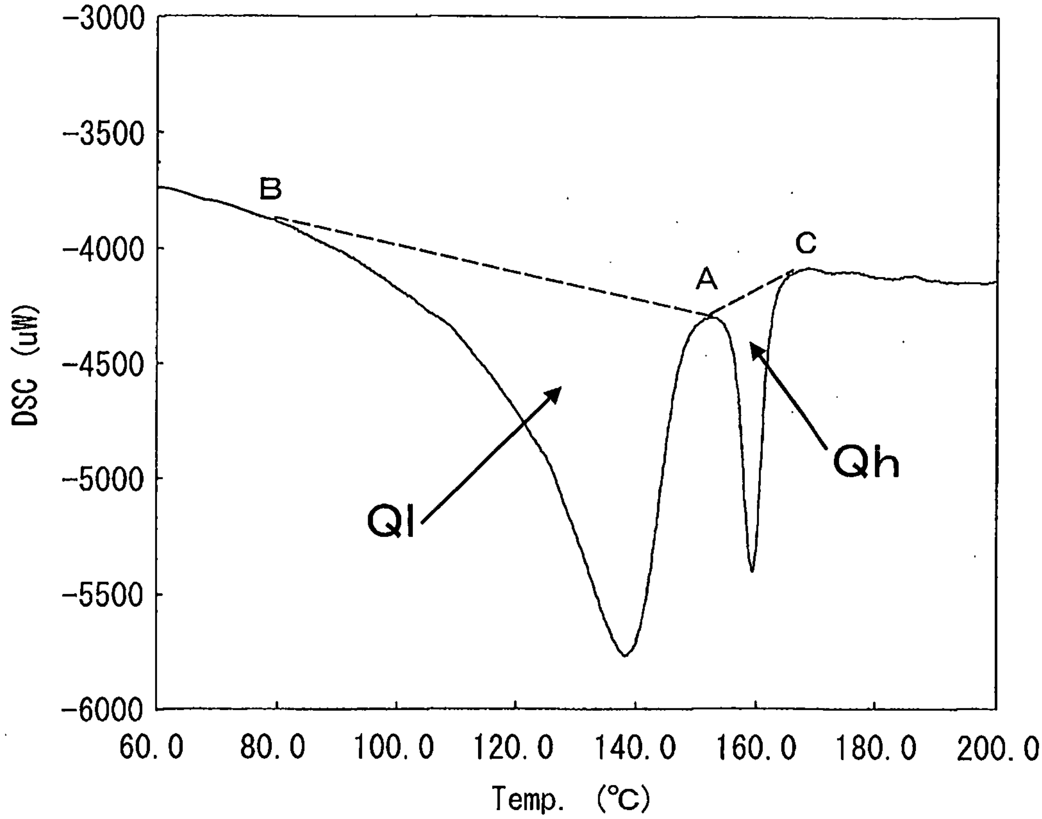
-3000
-3500
-4000
-4500
-5000
-5500
-6000
DSC (uW)
60. 0
80. 0
100. 0
120. 0
140. 0
160. 0
180. 0
200. 0
Temp. (°C)
B
A
C
Ql
Qh

F I G. 2

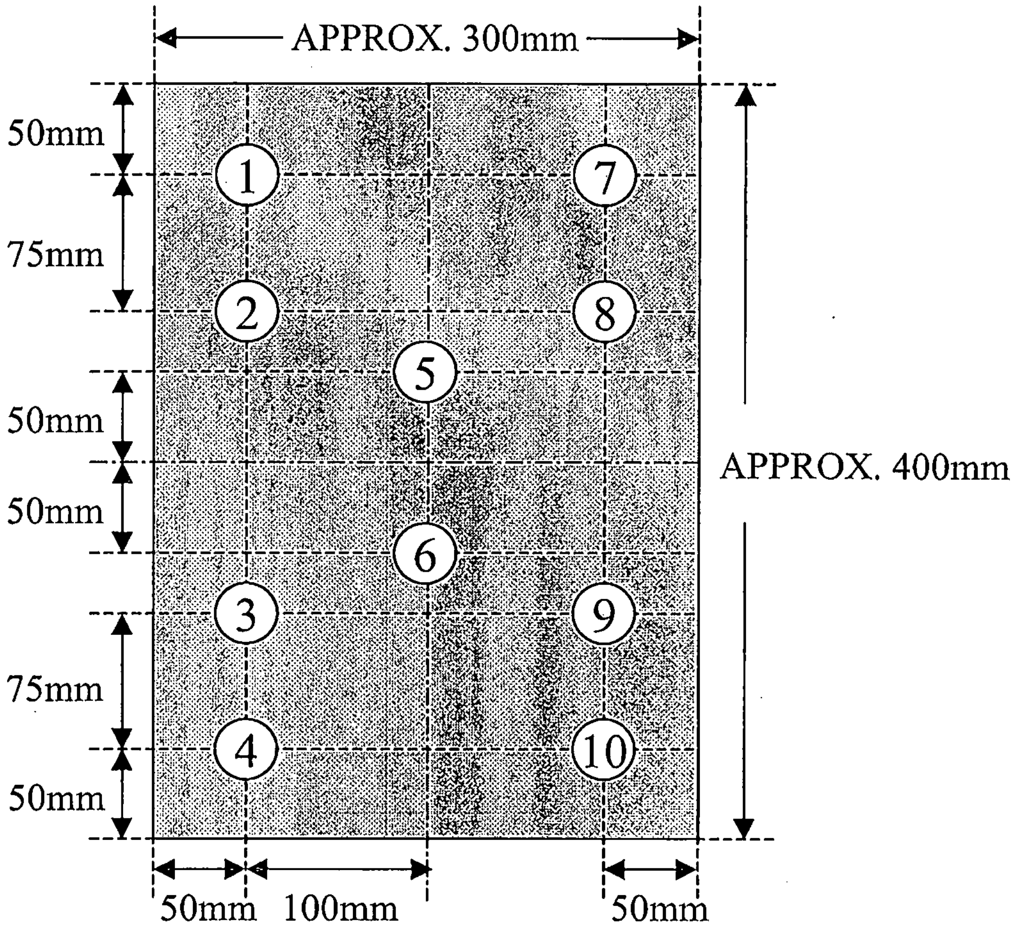
APPROX. 300mm
50mm
75mm
50mm
50mm
75mm
50mm
APPROX. 400mm
1
2
3
4
5
6
7
8
9
10
50mm
100mm
50mm

FIG. 3

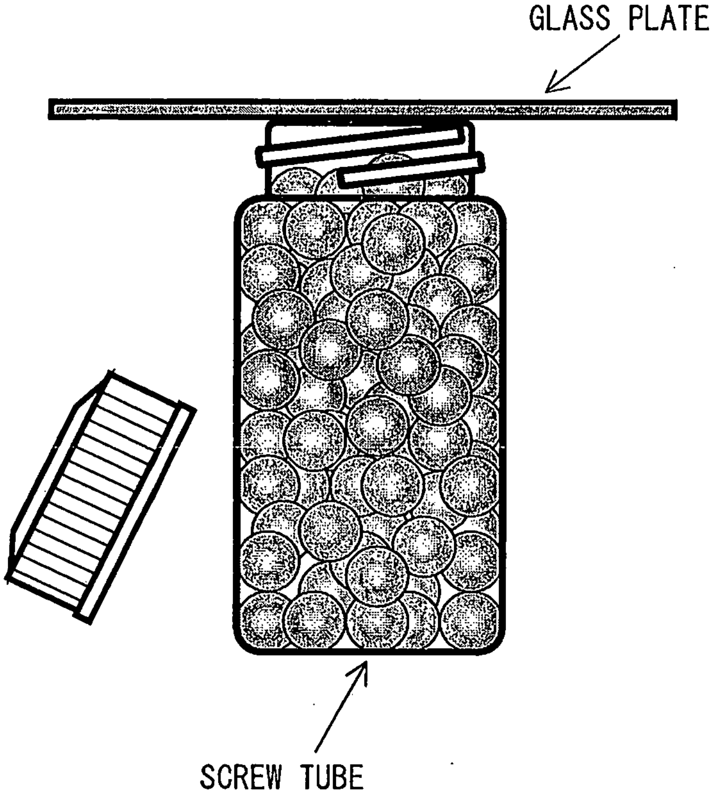

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7304895 A
- JP 8012798 A
- JP 8092408 A
- JP 2000290421 A
- WO 2009001645 PCT
- JP 2009173021 A
- JP 2003231770 A
- JP 2000007854 A
- JP 2002146113 A
- JP 2002179812 A